# EUROPÄISCHE PATENTSCHRIFT

(11) **EP 3 246 995 B1**
(45) Veröffentlichungstag und Bekanntmachung des Hinweises auf die Patenterteilung: **13.05.2020**
(21) Anmeldenummer: 16169977.2
(22) Anmeldetag: 17.05.2016
(51) Int. Cl.: H01R 13/447, H01R 9/24, H02B 1/056, H02B 1/052, H01R 9/28

(54) **STROMSAMMELSCHIENENSYSTEM**
BUSBAR SYSTEM
SYSTEME DE BARRES OMNIBUS

(43) Veröffentlichungstag der Anmeldung: 22.11.2017
(73) Patentinhaber: Wöhner GmbH & Co. KG Elektrotechnische Systeme, 96472 Rödental (DE)
(72) Erfinder: RAU, Maximilian, 96237 Ebersdorf (DE); STEINBERGER, Philipp, 96450 Coburg (DE)
(74) Vertreter: Isarpatent

(56) Entgegenhaltungen:
- EP-A1- 2 863 496
- WO-A1-2004/057716
- DE-A1-102013 103 544
- US-A- 4 567 654
- US-A1- 2006 121 796

## Beschreibung

Die Erfindung betrifft ein Stromsammelschienensystem zum Anschluss von Geräten mithilfe eines berührungsgeschützten integrierten Grundplattenmoduls.

Stromsammelschienen können eine oder mehrere Stromsammelschienen zur Stromversorgung von elektrischen Geräten umfassen. Dabei werden Geräte direkt oder mittels Adaptereinrichtungen auf die Stromsammelschienen aufgesetzt. Herkömmliche Stromsammelschienensysteme verwenden Sammelschienen mit einem rechteckigen Querschnitt zur Stromführung. Die Stromsammelschienen können innerhalb von Schaltschränken montiert werden. Stromsammelschienen werden für ein- oder mehrphasige Stromversorgungssysteme eingesetzt. Zur mehrphasigen Stromversorgung werden Stromsammelschienen herkömmlicherweise parallel zueinander angeordnet, wobei Schaltgeräte mittels Rastelementen oder mithilfe von Adaptereinrichtungen auf die parallel angeordneten Stromsammelschienen aufgesetzt werden. Bei herkömmlichen Stromsammelschienensystemen ist es notwendig, die stromführenden Stromsammelschienen an Stellen, an denen keine Schaltgeräte an die Stromsammelschienen montiert sind, mithilfe von Schutzabdeckungen für einen Nutzer berührungssicher zu machen. Bei herkömmlichen Stromsammelschienensystemen besteht für einen Nutzer daher ein erheblicher Montageaufwand, da nicht nur die Schaltgeräte an die Stromsammelschienen montiert werden müssen, sondern auch zusätzlich elektrisch isolierende Abdeckelemente zur Sicherung des Nutzers an die Stromsammelschienen angebracht werden müssen. Dies wird zusätzlich dadurch erschwert, dass abhängig von der Größe der auf die Stromsammelschienen montierten Schaltgeräte meist keine geeigneten genau passenden elektrisch isolierenden Abdeckelemente vorhanden sind, um diese lückenlos auf die Stromsammelschienen zu montieren. In vielen Fällen bleiben daher Spalten bzw. Lücken zwischen den auf den Stromsammelschienen montierten Schaltgeräten und den anschließend montierten isolierenden Schutzabdeckelementen. Aufgrund des Vorhandenseins der hierdurch entstehenden Lücken ist der Berührungsschutz für einen Nutzer oder Monteur vermindert, sodass die Gefahr besteht, dass ein Monteur bei unachtsamer Handhabung eine unter den isolierenden Abdeckungen verlaufende Stromsammelschiene berührt und einen elektrischen Stromschlag erhält.

EP2863496 A1 offenbart ein Berührungsschutzsystem für Stromsammelschienen mit flächig ausgebildeten Berührungsschutzmodulen, welche jeweils Haltefüße zum Hintergreifen der Stromsammelschienen und Verrastungselemente zum gegenseitigen Verrasten mit benachbarten Berührungsschutzmodulen aufweisen, wobei die Berührungsschutzmodule für jede Stromsammelschiene einen Klemmen-Aufnahmebereich zur Aufnahme von Anschlussklemmen, die zur elektrischen Kontaktierung der jeweiligen Stromsammelschiene vorgesehen sind, aufweisen.

Es ist daher eine Aufgabe der vorliegenden Erfindung, ein Stromsammelschienensystem zu schaffen, welches einem Nutzer eine höhere Bediensicherheit bietet und welches in einfacher Weise montierbar ist.

Diese Aufgabe wird erfindungsgemäß durch ein Stromsammelschienensystem mit den in Patentanspruch 1 angegebenen Merkmalen gelöst.

Das erfindungsgemäße Stromsammelschienensystem ist besonders bediensicher, da die elektrisch leitfähigen Stromsammelschienenmodule berührungsgeschützt innerhalb eines isolierenden Grundplattenmoduls enthalten sind.

Ein weiterer Vorteil des erfindungsgemäßen Stromsammelschienensystems besteht darin, dass das Anbringen der Geräte an das berührungsgeschützte Grundplattenmodul werkzeuglos erfolgen kann, da die Geräte federnde Kontakte aufweisen, die in die Sammelschienenmodule eingreifen
Ein weiterer Vorteil des erfindungsgemäßen Stromsammelschienensystems besteht darin, dass die Montage des Stromsammelschienensystems besonders einfach und schnell erfolgen kann, da die berührungsgeschützten Grundplattenmodule mit den darin integrierten Stromsammelschienen bereits vorkonfiguriert sind und somit keine Montage der einzelnen Stromsammelschienenmodule bzw. Stromsammelschienen seitens des Monteurs erfolgen muss.
Das Grundplattenmodul kann auf verschiedene Tragschienen (flache und hohe Ausführung) des Schaltschrankes montiert werden. Durch die spezielle Ausbildung eines doppelt wirkenden Rastmechanismus kann das Grundplattenmodul senkrecht aufgesetzt werden und muss nicht gekippt werden. Dies ist insbesondere bei einem großen Grundplattenmodul (z.B. 5 poliges System oder System mit zusätzlichen Modulen) vorteilhaft. Als weitere Montagemöglichkeit kann das Grundplattenmodul auf eine Montageplatte des Schaltschrankes verschraubt werden.

Weiterhin können die verschiedenen anzuschließenden Geräte, insbesondere Schaltgeräte, in einfacher Weise direkt von vorne auf das berührungsgeschützte Grundplattenmodul aufgesetzt und senkrecht nach vorne in die Stromsammelschienen eingesteckt werden, welche innerhalb des berührungsgeschützten Grundplattenmoduls vorgesehen sind. Die Geräte können somit frontal ohne Kippbewegung auf das berührungsgeschützte Grundplattenmodul aufgesetzt und in einer Bewegung in die darunterliegenden Kontaktschlitze des Kontaktöffnungsrasters der elektrisch leitfähigen Stromsammelschienenmodule eingesteckt werden. Dementsprechend können die angeschlossenen Geräte in einfacher Weise wieder von dem Grundplattenmodul des Stromsammelschienensystems abgenommen werden.

Das Grundplattenmodul übernimmt verschiedene Funktionen. Es dient als Sammelschienenträger zur Aufnahme der Kräfte und als mechanische Schnittstelle zur Befestigung im Schaltschrank. Ferner dient es als Berührungsschutz der Sammelschienenmodule. Darüber hinaus dient das Grundplattenmodul der Sicherstellung der Luft- und Kriechstrecken für IEC- und UL-Anwendungen.
Bei dem erfindungsgemäßen Stromsammelschienensystem werden keine herkömmlichen massiven Stromsammelschienenmodule mit rechteckigem Querschnitt eingesetzt, sondern Stromsammelschienenmodule, die integrierte Kontaktöffnungen aufweisen, welche voneinander gleichmäßig entsprechend einem vorgegebenen Kontaktöffnungsraster beabstandet sind.

Bei einer möglichen Ausführungsform des erfindungsgemäßen Stromsammelschienensystems weisen die in dem berührungsgeschützten Grundplattenmodul enthaltenen Stromsammelschienenmodule ein U-förmiges Querprofil mit gegenüberliegenden Seitenwangen auf.

Bei einer möglichen Ausführungsform ist der Querschnitt bzw. das Querprofil der beiden gegenüberliegenden Seitenwangen zur Leitung eines elektrischen Stromes mit einer vorgegebenen maximalen Stromamplitude ausgelegt.

Bei einer möglichen Ausführungsform des erfindungsgemäßen Stromsammelschienensystems sind die beiden gegenüberliegenden Seitenwangen des Stromsammelschienenmoduls mit U-förmigem Querprofil über einen Verbindungssteg miteinander verbunden, welcher Kontaktöffnungen des vorgegebenen Kontaktöffnungsrasters zum Einstecken gefederter elektrischer Anschlusskontakte eines anzuschließenden Gerätes aufweist.

Darüber hinaus kann das Stromsammelschienenmodul flach, mit einer einseitigen Wange, als geschlossenes oder offenes Hohlprofil ausgebildet sein.

Bei einer weiteren möglichen Ausführungsform des erfindungsgemäßen Stromsammelschienensystems ist das berührungsgeschützte Grundplattenmodul des Stromsammelsystems zur Aufnahme mehrerer darin angeordneter Stromsammelschienen ausgebildet, die jeweils aus mindestens einem Stromsammelschienenmodul bestehen.

Bei einer weiteren möglichen Ausführungsform ist das Grundplattenmodul mehrteilig ausgeführt. Jeder Teil des Grundplattenmoduls kann eine oder mehrere Stromsammelschienenmodule aufnehmen.

Bei einer weiteren möglichen Ausführungsform des erfindungsgemäßen Stromsammelschienensystems sind die elektrisch leitfähigen Stromsammelschienenmodule mit mindestens einem berührungsgeschützten länglich ausgebildeten Deckelmodul abgedeckt, das Durchführungsöffnungen zum Hindurchführen von Anschlusskontakten aufweist, wobei die Anschlusskontakte zum Anschließen eines Gerätes oder eines weiteren Moduls in die unter den Durchführungsöffnungen liegenden Kontaktöffnungen des Kontaktöffnungsrasters der elektrisch leitfähigen Stromsammelschienen einsteckbar sind. Das Deckelmodul kann mit dem Grundplattenmodul verclipst, verschraubt, verschweißt oder verklebt sein.

Bei einer bevorzugten Ausführungsform des erfindungsgemäßen Stromsammelschienensystems weist das berührungsgeschützte Grundplattenmodul eine mit dem Grundplattenmodul fest verbundene berührungsgeschützte Abdeckplatte mit Durchführöffnungen für Anschlusskontakte auf, wobei die Durchführöffnungen direkt über den Kontaktöffnungen der in dem Grundplattenmodul enthaltenen bzw. integrierten Stromsammelschienenmodule liegen.

Bei einer weiteren möglichen Ausführungsform des erfindungsgemäßen Stromsammelschienensystems weist das Grundplattenmodul an seiner Rückseite Befestigungsmittel zur Befestigung auf einer Tragschiene oder einer Montageplatte auf.

Bei einer weiteren möglichen Ausführungsform des erfindungsgemäßen Stromsammelschienensystems sind die Anschlusskontakte eines an das Stromsammelschienensystem anzuschließenden Gerätes V-förmig oder fingerförmig ausgebildet und sind jeweils durch Durchführöffnungen der berührungsgeschützten Abdeckplatte des Grundplattenmoduls hindurchführbar und in darunterliegende Kontaktöffnungen eines Stromsammelschienenmoduls einsteckbar.

Bei einer weiteren möglichen Ausführungsform des erfindungsgemäßen Stromsammelschienensystems weist die berührungsgeschützte Abdeckplatte des Grundplattenmoduls Kodierungsschlitze für Verpolschutzrippen zum korrekten Anschließen von Geräten in die Stromsammelschienenmodule des Stromsammelschienensystems auf.

Bei einer weiteren möglichen Ausführungsform des erfindungsgemäßen Stromsammelschienensystems enthält das berührungsgeschützte Grundplattenmodul neben Stromsammelschienenmodulen elektrische Datenleitungen zur Kommunikation zwischen den an das Stromsammelschienensystem angeschlossenen Geräten.

Bei einer weiteren möglichen Ausführungsform des erfindungsgemäßen Stromsammelschienensystems kommunizieren die an das Stromsammelschienensystem angeschlossenen Geräte mittels Powerline-Kommunikation direkt über die in dem berührungsgeschützten Grundplattenmodul enthaltenen Stromsammelschienen miteinander.

Bei einer weiteren möglichen Ausführungsform des erfindungsgemäßen Stromsammelschienensystems kommunizieren die an das Stromsammelschienensystem angeschlossenen Geräte über eine drahtlose Funkschnittstelle miteinander.

Bei einer weiteren möglichen Ausführungsform des erfindungsgemäßen Stromsammelschienensystems sind in dem berührungsgeschützten Grundplattenmodul Messmodule zur Strom- und Spannungsmessung an den in dem berührungsgeschützten Grundplattenmodul enthaltenen Stromsammelschienenmodulen vorgesehen.

Bei einer weiteren möglichen Ausführungsform des erfindungsgemäßen Stromsammelschienensystems enthält das berührungsgeschützte Grundplattenmodul neben Stromsammelschienenmodulen elektrische Versorgungsleitungen zur Übertragung von Hilfsversorgungsspannungen für in dem berührungsgeschützten Grundplattenmodul vorgesehene Messmodule und/oder für die an die Stromsammelschienenmodule angeschlossene Geräte.

Bei einer weiteren möglichen Ausführungsform des erfindungsgemäßen Stromsammelschienensystems weist das berührungsgeschützte Grundplattenmodul mechanische Verbindungselemente zur Verbindung mit weiteren berührungsgeschützten Grundplattenmodulen auf.

Bei einer weiteren möglichen Ausführungsform des erfindungsgemäßen Stromsammelschienensystems weist das berührungsgeschützte Grundplattenmodul schockdämpfende und/oder vibrationsdämpfende Verbindungselemente zur mechanischen Abstützung von angeschlossenen Geräten auf.

Bei einer weiteren möglichen Ausführungsform des erfindungsgemäßen Stromsammelschienensystems sind an dem berührungsgeschützten Grundplattenmodul Einspeisebauelemente zur Stromeinspeisung mit beliebigen Leitungen, insbesondere Rundleiter, Flachleiter etc., in das Stromsammelschienensystem angebracht. Diese Einspeisebauelemente können sich sowohl auf der Vorderseite als auch auf der Rückseite des Grundplattenmoduls befinden. Die Einspeisebauelemente können komplett in das Grundplattenmodul integriert sein oder angesteckt werden.

Bei einer weiteren möglichen Ausführungsform des erfindungsgemäßen Stromsammelschienensystems besteht das berührungsgeschützte Grundplattenmodul aus einem wärmeleitfähigen flammgeschützten Kunststoff.

Bei einer weiteren möglichen Ausführungsform des erfindungsgemäßen Stromsammelschienensystems weist das berührungsgeschützte Grundplattenmodul einen IP20-Berührungsschutz auf.

Bei einer weiteren möglichen Ausführungsform des erfindungsgemäßen Stromsammelschienensystems weist das berührungsgeschützte Grundplattenmodul einen IP30-Berührungsschutz auf. Eine Erweiterung auf IP40 ist über zusätzliche Abdeckungen möglich.

Bei einer weiteren möglichen Ausführungsform des erfindungsgemäßen Stromsammelschienensystems ist ein Strom-Einspeisemodul vorgesehen, das zum Einspeisen verschiedener elektrischer Stromphasen in die in dem berührungsgeschützten Grundplattenmodul parallel angeordneten, jeweils aus mindestens einem Stromsammelschienenmodul zusammengesetzten Stromsammelschienen dient.

Bei einer möglichen Ausführungsform des erfindungsgemäßen Stromsammelschienensystems besitzt das Strom-Einspeisemodul für jede in dem berührungsgeschützten Grundplattenmodul parallel angeordnete Stromsammelschiene einen berührungsgeschützten Anschlusszapfen mit elektrischen Anschlusskontakten zum Einstecken in Kontaktöffnungen eines Stromsammelschienenmoduls.

Bei einer weiteren möglichen Ausführungsvariante weist das Stromsammelschienensystem ein berührungsgeschütztes Brückenmodul auf, wobei ein berührungsgeschütztes Brückenmodul des Stromsammelschienensystems beiderseitig jeweils mehrere Anschlusskontakte zum Einstecken in Kontaktöffnungen aufweist, die sich an Enden zweier jeweils durch ein berührungsgeschütztes Deckelmodul abgedeckter länglich ausgebildeter und elektrisch leitfähiger benachbarter Stromsammelschienenmodule einer Stromsammelschiene des Stromsammelschienensystems befinden.

Bei einer möglichen Implementierung dieser Ausführungsvariante weist das berührungsgeschützte Brückenmodul beiderseits mittig angeordnete Durchführöffnungen zum Hindurchführen von Anschlusskontakten auf, die zum Anschließen eines Gerätes an das Stromsammelschienensystem in Kontaktöffnungen des Kontaktöffnungsrasters der beiden durch das Brückenmodul zusammengesetzten elektrisch leitfähigen Stromsammelschienenmodule einsteckbar sind.

Bei einer weiteren möglichen Ausführungsvariante des erfindungsgemäßen Stromsammelschienensystems weist dieses ein berührungsgeschütztes Endkappenmodul auf, wobei ein berührungsgeschütztes Endkappenmodul des Stromsammelschienensystems mehrere Anschlusskontakte zum Einstecken in Kontaktöffnungen des Kontaktöffnungsrasters aufweist, die sich an einem Ende eines durch ein berührungsgeschütztes Deckelmodul abgedeckten länglich ausgebildeten und elektrisch leitfähigen Stromsammelschienenmoduls einer Stromsammelschiene des Stromsammelschienensystems befinden.

Bei einer möglichen Implementierung dieser Ausführungsvariante weist das berührungsgeschützte Endkappenmodul mittig angeordnete Durchführöffnungen zum Hindurchführen von Anschlusskontakten auf, die zum Anschließen eines Gerätes an das Stromsammelschienensystem in Kontaktöffnungen des Kontaktöffnungsrasters einsteckbar sind, die unter dem berührungsgeschützten Endkappenmodul liegen.

Bei einer weiteren möglichen Ausführungsform des erfindungsgemäßen Stromsammelschienensystems weist ein berührungsgeschütztes länglich ausgebildetes Deckelmodul des Stromsammelschienensystems an seinen beiden Enden jeweils eine Aussparung auf, die dazu vorgesehen ist, ein Endkappenmodul, eine Seite eines Brückenmoduls oder einen Anschlusszapfen eines Strom-Einspeisemoduls des Stromsammelschienensystems in Kontaktöffnungen des Kontaktöffnungsrasters elektrisch leitfähiger Stromsammelschienen des Stromsammelschienensystems formbündig zur Bildung einer berührungsgeschützten Abdeckplatte des berührungsgeschützten Grundplattenmoduls des Stromsammelschienensystems einzustecken.

Bei einer weiteren möglichen Ausführungsform des erfindungsgemäßen Stromsammelschienensystems ist ein an das Stromsammelschienensystem anzuschließendes Gerät auf die aus den Stromsammelschienenmodulen zusammengesetzten Stromsammelschienen des Stromsammelschienensystems zur Herstellung einer mechanischen Verbindung aufrastbar.

Bei einer weiteren möglichen Ausführungsform des erfindungsgemäßen Stromsammelschienensystems weist ein an das Stromsammelschienensystem anzuschließendes Gerät zusätzlich Rastmittel auf, die in parallel zu den Stromsammelschienen verlaufende Raststege des berührungsgeschützten Grundplattenmoduls des Stromsammelschienensystems aufrastbar sind.

Bei einer weiteren möglichen Ausführungsform des erfindungsgemäßen Stromsammelschienensystems weisen die Rastmittel des an das Stromsammelschienensystem anzuschließenden Gerätes Rastnasen auf, die zum Ent- und Verriegeln der mechanischen Verbindung an einem manuell betätigbaren Rastschlitten des anzuschließenden Gerätes angebracht sind, der zu den Stromsammelschienen des Stromsammelschienensystems innerhalb eines Gehäuses des anzuschließenden Gerätes lateral verschiebbar ist.

Bei einer weiteren möglichen Ausführungsform des erfindungsgemäßen Stromsammelschienensystems sind die Anschlusskontakte zur Herstellung der elektrischen Verbindung durch Verwendung von Kupferwerkstoffen mit Federeigenschaften selbstfedernd ausgebildet oder fremdgefedert.

Bei einer weiteren möglichen Ausführungsform des erfindungsgemäßen Stromsammelschienensystems ist ein mittels der Anschlusskontakte an das Stromsammelschienensystem anschließbares Gerät ein elektrisches, elektronisches oder elektromechanisches Gerät.

Bei einer möglichen Ausführungsform des erfindungsgemäßen Stromsammelschienensystems weist das Gerät zur Herstellung einer elektrischen Verbindung mit dem Stromsammelschienensystem elektrische Anschlusskontakte und/oder Rastmittel zur Herstellung einer mechanischen Verbindung mit dem Stromsammelschienensystem und/oder Verpolschutzrippen zum korrekten Anschließen an das Stromsammelschienensystem auf.

Bei einer möglichen Ausführungsform des erfindungsgemäßen Stromsammelschienensystems weist ein an das Stromsammelschienensystem anschließbares Gerät ein Motorsteuergerät, ein Schutzgerät, ein Messgerät oder ein Adaptergerät auf.

Bei einer weiteren möglichen Ausführungsform des erfindungsgemäßen Stromsammelschienensystems enthält das berührungsgeschützte Grundplattenmodul des Stromsammelschienensystems erste Stromsammelschienenmodule für verschiedene Stromphasen des Stromsammelschienensystems und zweite Stromsammelschienenmodule für Schutzleiter des Stromsammelschienensystems.

Bei einer weiteren möglichen Ausführungsform des erfindungsgemäßen Stromsammelschienensystems weisen die ersten Stromsammelschienenmodule ein U-förmiges Querprofil mit zwei einander gegenüberliegenden Seitenwangen auf, die zur elektrischen Leitung einer Stromphase mit einer vorgegebenen maximalen Stromamplitude ausgelegt sind.

Bei einer weiteren möglichen Ausführungsform des erfindungsgemäßen Stromsammelschienensystems ist das berührungsgeschützte Grundplattenmodul in ein Schaltschrankgehäuse zur Aufnahme mehrerer Geräte integriert, die in die Kontaktöffnungen des Kontaktöffnungsrasters der in dem berührungsgeschützten Grundplattenmodul enthaltenen Stromsammelschienenmodule eingesteckt sind. Dabei kann das Grundplattenmodul entweder ein integrierter, fester Bestandteil des Schaltschrankgehäuses sein oder ist mit diesem verbunden.

Die Erfindung schafft ferner gemäß einem weiteren Aspekt ein Stromsammelschienenmodul für ein Stromsammelschienensystem mit den in Patentanspruch 27 angegebenen Merkmalen.

Die Erfindung schafft demnach ein Stromsammelschienenmodul für ein Stromsammelschienensystem, wobei das Stromsammelschienenmodul eine Vielzahl gleichmäßig beabstandeter Kontaktöffnungen eines Kontaktöffnungsrasters aufweist und zur Leitung eines elektrischen Stromes mit einer vorgegebenen maximalen Stromamplitude ausgelegt sind. Das Stromsammelschienenmodul kann dabei verschiedene Formen annehmen, insbesondere kann es ein U-förmiges Querprofil aufweisen.

Bei einer möglichen Ausführungsform des erfindungsgemäßen Stromsammelschienenmoduls sind die gegenüberliegenden Seitenwangen des Stromsammelschienenmoduls über einen Verbindungssteg miteinander verbunden, welcher die Kontaktschlitze des Kontaktöffnungsrasters zum Einstecken gefederter elektrischer Anschlusskontakte eines anzuschließenden Gerätes oder eines Einspeisemoduls, eines Brückenmoduls, eines Endkappenmoduls oder eines sonstigen Moduls des Stromsammelschienensystems aufweist.

Im Weiteren werden mögliche Ausführungsformen des erfindungsgemäßen Stromsammelschienensystems unter Bezugnahme auf die beigefügten Figuren näher erläutert.

Es zeigen:
- Fig. 1: eine leicht perspektivische Ansicht einer möglichen Ausführungsform eines in dem erfindungsgemäßen Stromsammelschienensystem verwendeten berührungsgeschützten Grundplattenmoduls mit verbautem Deckelmodul;
- Fig. 2: zeigt das in Fig. 1 dargestellte berührungsgeschützte Grundplattenmodul mit entferntem Deckelmodul;
- Figuren 3A, 3B, 3C, 3D: zeigen verschiedene Ausführungsbeispiele für mögliche Stromsammelschienenmodule, wie sie bei dem erfindungsgemäßen Stromsammelschienensystem verwendet werden können;
- Figuren 4A, 4B: zeigen verschiedene Ausführungsvarianten von elektrischen Anschlusskontakten zum Anschließen elektrischer Geräte in Kontaktschlitze von Stromsammelschienenmodulen, wie sie in den Figuren 3A bis 3D dargestellt sind;
- Fig. 5: zeigt eine perspektivische Ansicht auf eine Ausführungsform eines bei dem erfindungsgemäßen Stromsammelschienensystem verwendeten berührungsgeschützten Grundplattenmoduls;
- Fig. 6: zeigt eine Vorderansicht auf das in Fig. 5 dargestellte berührungsgeschützte Grundplattenmodul;
- Fig. 7: zeigt eine perspektivische Ansicht auf ein Gehäuse eines Gerätes, das in ein berührungsgeschütztes Grundplattenmodul des erfindungsgemäßen Stromsammelschienensystems eingesetzt werden kann;
- Fig. 8: zeigt perspektivisch das Einsetzen des in Fig. 7 dargestellten Gerätes in ein berührungsgeschütztes Grundplattenmodul des erfindungsgemäßen Stromsammelschienensystems;
- Fig. 9: zeigt das in Fig. 8 dargestellte Gerät nach Einsetzen in das berührungsgeschützte Grundplattenmodul von vorne;
- Figuren 10A, 10B: zeigen eine Schnittansicht durch das in den Figuren 7, 8, 9 dargestellte Gerät zur Erläuterung eines Ausführungsbeispiels des erfindungsgemäßen Stromsammelschienensystems;
- Fig. 11: zeigt eine perspektivische Ansicht von hinten auf eine mögliche Ausführungsform eines berührungsgeschützten Grundplattenmoduls des Stromsammelschienensystems, wobei je zwei weitere Grundplattenmodule oben und unten angerastet sind;
- Fig. 12: zeigt eine Frontalansicht auf ein Ausführungsbeispiel eines berührungsgeschützten Grundplattenmoduls von hinten, wobei je zwei weitere Grundplattenmodule oben und unten angerastet sind;
- Fig. 13: zeigt einen Ausschnitt auf ein an dem berührungsgeschützten Grundplattenmodul gemäß Fig. 12 angebrachten Rastbauelement, wobei an das Rastbauelement bereits Erweiterungen angebracht sind, die für die zwei weiteren Grundplattenmodule notwendig sind;
- Fig. 14: zeigt das in Fig. 13 dargestellte Rastbauelement von hinten;
- Figuren 15A, 15B, 15C, 15D: zeigen eine mögliche Befestigung eines berührungsgeschützten Grundplattenmoduls mithilfe der in den Figuren 12, 13, 14 dargestellten Rastbauelemente auf einer Tragschiene;
- Fig. 16: zeigt eine spezielle Applikation des Grundplattenmoduls auf ein Befestigungssystem der Firma Lütze;
- Figuren 17A, 17B, 17C, 17D, 17E: zeigen ein Ausführungsbeispiel des erfindungsgemäßen Stromsammelschienensystems, bei dem ein berührungsgeschütztes Grundplattenmodul auf einer Montageplatte montiert ist, wobei auch hier zwei weitere Grundplattenmodule dargestellt sind;
- Fig. 18A: zeigt die Montage von weiteren Grundplattenmodulen an ein Basisgrundplattenmodul;
- Fig. 18B: zeigt ein Detail der mechanischen Schnittstelle zur Befestigung von zusätzlichen Grundplattenmodulen;
- Figuren 19A, 19B, 19C: stellen die Montage von weiteren Zusatzmodulen dar und die Besonderheit der Verlängerung der Rastbauelemente;
- Figuren 20A, 20B, 20C: zeigen die Integration in ein Kleinverteilergehäuse als ein weiteres Ausführungsbeispiel des erfindungsgemäßen Stromsammelschienensystems;
- Fig. 21: ist eine perspektivische Ansicht eines weiteren Ausführungsbeispiels des erfindungsgemäßen Stromsammelschienensystems.

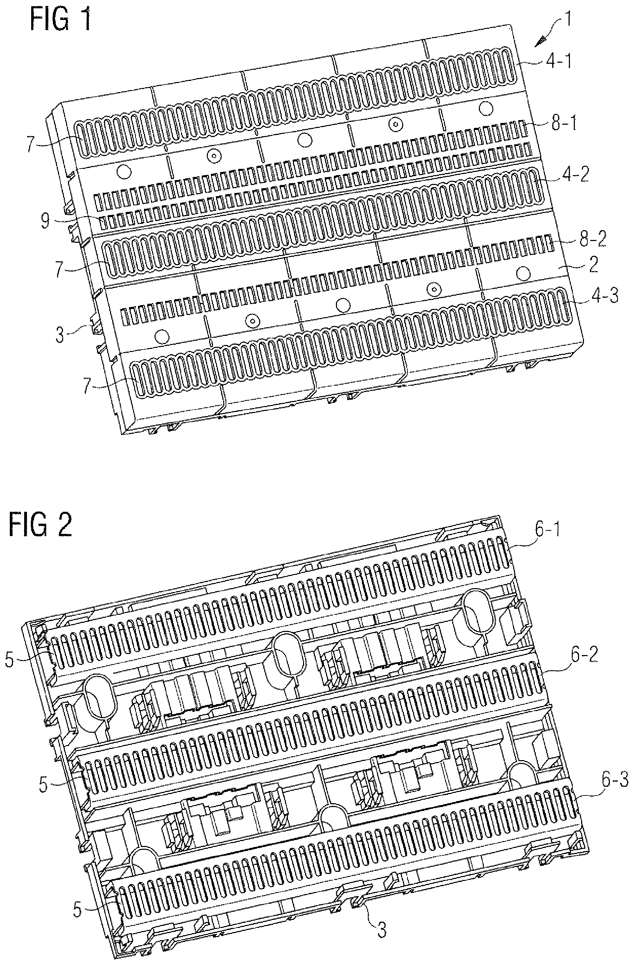

In Fig. 1 ist ein Ausführungsbeispiel für ein berührungsgeschütztes Grundplattenmodul 1, welches bei dem erfindungsgemäßen Stromsammelschienensystem eingesetzt werden kann, leicht perspektivisch dargestellt. Das in Fig. 1 gezeigte berührungsgeschützte Grundplattenmodul 1 besteht aus einer Abdeckplatte 2 und einem Unterteil 3, die beide fest miteinander verbunden sind. Bei einer möglichen Ausführungsform ist das Oberteil bzw. die Abdeckplatte 2 auf das Unterteil 3 mittels Klippverbindungen aufgeklippt. Bei alternativen Ausführungsformen ist das Oberteil bzw. die Abdeckplatte 2 mit dem Unterteil 3 fest verschraubt. Bei einer weiteren möglichen Ausführungsform des erfindungsgemäßen Stromsammelschienensystems ist das Oberteil bzw. die Abdeckplatte 2 des berührungsgeschützten Grundplattenmoduls 1 mit dem Unterteil 3 des berührungsgeschützten Grundplattenmoduls 1 nach Herstellung fest verschweißt. Bei einer weiteren möglichen Ausführungsform des erfindungsgemäßen Stromsammelschienensystems ist das Oberteil bzw. die Abdeckplatte 2 mit dem Unterteil 3 des berührungsgeschützten Grundplattenmoduls 1 vernietet oder verklebt. Sowohl das Oberteil 2 als auch das Unterteil 3 besteht aus einem elektrisch isolierenden Material. Bei einer bevorzugten Ausführungsform besteht das Oberteil 2 und das Unterteil 3 aus einem flammgeschützten Kunststoff. Bei einer bevorzugten Ausführungsform weist der elektrisch isolierende flammgeschützte Kunststoff des Oberteils 2 und des Unterteils 3 des berührungsgeschützten Grundplattenmoduls 1 eine relativ hohe Wärmeleitfähigkeit zum Ableiten von Wärme auf.

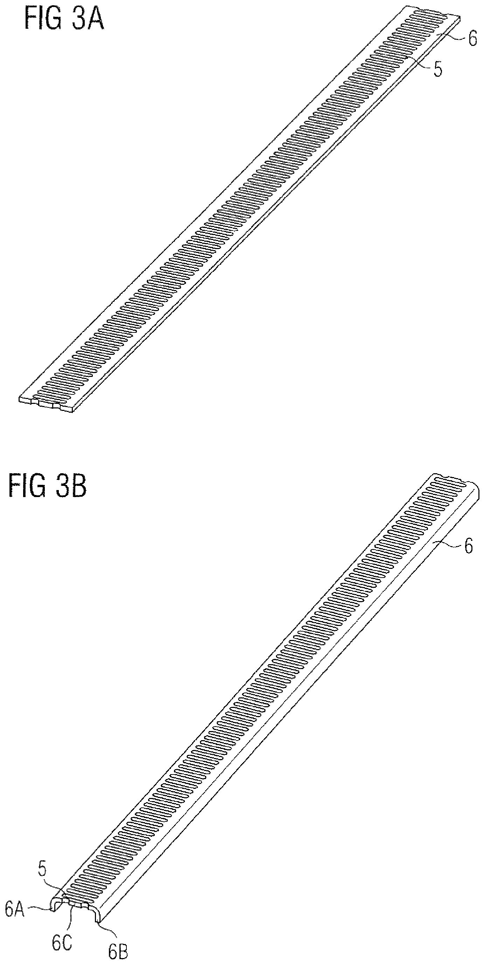

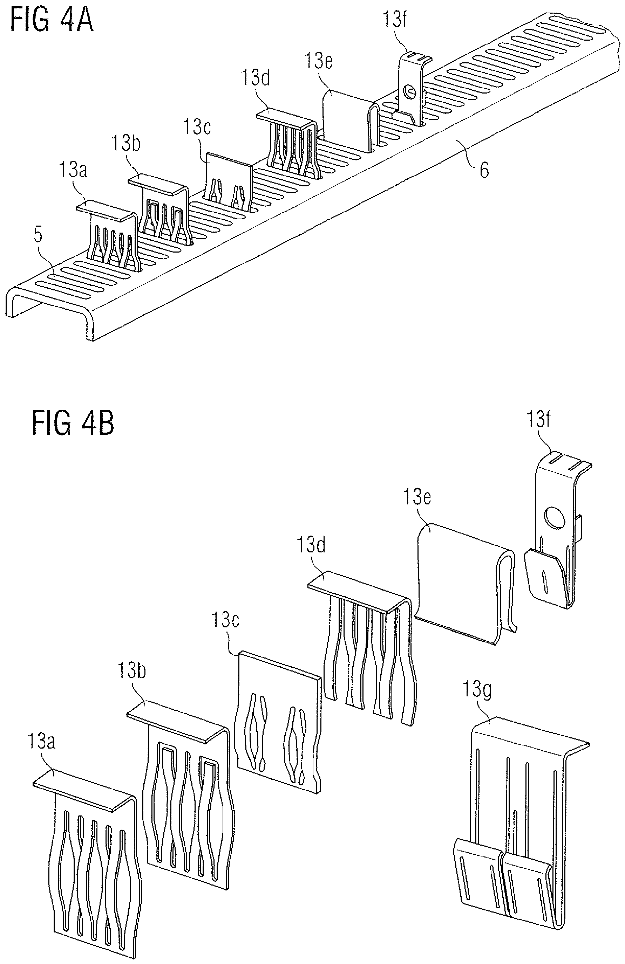

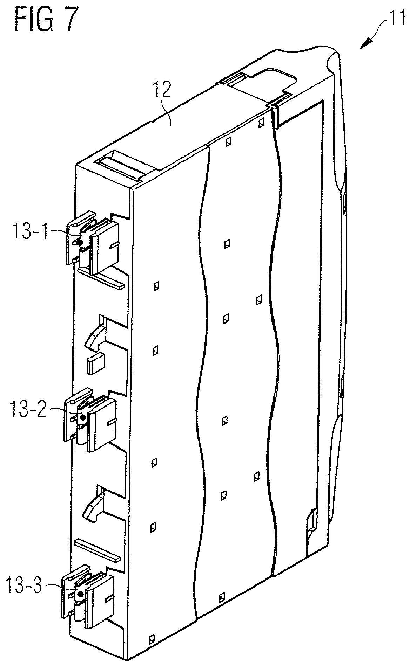

Bei dem erfindungsgemäßen Stromsammelschienensystem ist es möglich, verschiedene elektrische Geräte 11, insbesondere Schaltgeräte, auf das berührungsgeschützte Grundplattenmodul 1 aufzusetzen und in Kontaktöffnungen 5 zum Anschluss der Geräte einzustecken. Das in Fig. 1 dargestellte berührungsgeschützte Grundplattenmodul 1 dient zur Aufnahme von länglich ausgebildeten und elektrisch leitfähigen Stromsammelschienenmodulen 6, wie sie in den Fig. 3A bis 3D dargestellt sind. Die Stromsammelschienenmodule 6 weisen dabei jeweils eine Vielzahl gleichmäßig beabstandeter Kontaktöffnungen 5 eines Kontaktöffnungsrasters auf. Die elektrischen Anschlusskontakte 13 eines anzuschließenden Gerätes 11 sind in Kontaktöffnungen 5 des Kontaktöffnungsrasters der in dem Grundplattenmodul 1 enthaltenen elektrisch leitfähigen Stromsammelschienenmodule 6 zur Herstellung einer elektrischen Verbindung einsteckbar. Wie in Fig. 7 erkennbar, sind die Anschlusskontakte 13 beidseitig von Kontaktschutzrippen umgeben, welche die Anschlusskontakte 13 vor mechanischer Beschädigung schützen. Die anzuschließenden Geräte 11 umfassen beispielsweise Motorschutzschalter, Leistungsschutzschalter, Sicherungshalter, Sicherungsschalter, elektronische Geräte oder sonstige Schaltgeräte eines Stromverteilungssystems. Die elektrischen Geräte 11 können direkt auf das Grundplattenmodul 1 aufgesteckt werden, ohne dass man hierfür Adaptereinrichtungen oder dergleichen benötigt. Die Geräte bzw. Schaltgeräte 11 besitzen jeweils ein Gehäuse, an deren Unterseite vorzugsweise V-förmige oder fingerförmige Anschlusskontakte 13 angebracht sind, wie in den Fig. 4A, 4B dargestellt. Diese Anschlusskontakte 13 dienen zur Herstellung einer elektrischen Verbindung mit den innerhalb des berührungsgeschützten Grundplattenmoduls 1 vorhandenen elektrisch leitfähigen Stromsammelschienenmodulen 6. Die Anschlusskontakte 13 der Geräte 11 sind bei einer möglichen Ausführungsform selbstfedernd ausgebildet. Bei einer weiteren möglichen Ausführungsform sind die Anschlusskontakte 13 der anzuschließenden Geräte 11 fremdgefedert.

Das in Fig. 1 dargestellte Ausführungsbeispiel eines berührungsgeschützten Grundplattenmoduls 1 ist für drei parallele Stromsammelschienen eines Stromsammelschienensystems vorgesehen. Dementsprechend weist die Vorderseite bzw. die Abdeckplatte 2 des berührungsgeschützten Grundplattenmoduls 1 drei Reihen 4-1, 4-2, 4-3 von Durchführöffnungen 7 auf. Die Anschlusskontakte 13 der Geräte 11 sind derart ausgebildet, dass sie durch die Durchführöffnungen 7 der Abdeckplatte bzw. des Oberteils 2 des berührungsgeschützten Grundplattenmoduls 1 hindurchführbar sind und nach dem Hindurchführen in direkt darunterliegende entsprechend angeordnete Kontaktöffnungen 5 eines vorgegebenen Kontaktöffnungsrasters der von dem isolierenden berührungsgeschützten Grundplattenmodul 1 umschlossenen elektrisch leitfähigen Stromsammelschienenmodule 6 einsteckbar sind. In dem berührungsgeschützten Grundplattenmodul 1 des erfindungsgemäßen Stromsammelschienensystems sind speziell ausgeformte bzw. ausgebildete Stromsammelschienenmodule 6 einsetzbar. Bei dem elektrisch leitfähigen Stromsammelschienenmodulen 6 handelt es sich um Stromsammelschienenmodule mit Kontaktöffnungen 5, d.h. die Stromsammelschienenmodule 6 besitzen jeweils eine Vielzahl gleichmäßig beabstandeter Kontaktöffnungen 5 eines vorgegebenen Kontaktöffnungsrasters. Die Kontaktöffnungen 5 und die Durchführöffnungen 7 sind bei einer Ausführungsform schlitzförmig. Alternativ sind die Kontaktöffnungen 5 und die Durchführöffnungen 7 kreisförmig, elliptisch, quadratisch oder dreieckförmig ausgebildet.

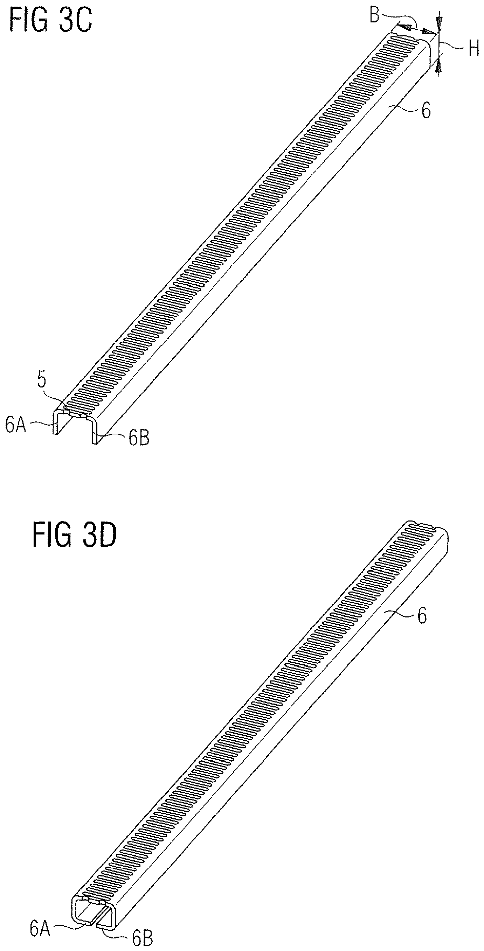

Die Figuren 3A, 3B, 3C, 3D zeigen verschiedene Ausführungsformen der elektrisch leitfähigen Stromsammelschienenmodule 5, die bei dem erfindungsgemäßen Stromsammelschienensystem verwendet werden können. In den Ausführungsbeispielen gemäß Figuren 3A bis 3D sind die Kontaktöffnungen 5 schlitzförmig geformt und bilden Kontaktschlitze.

Fig. 3A zeigt eine erste Ausführungsform eines elektrisch leitfähigen Stromsammelschienenmoduls 6, welches bei dem erfindungsgemäßen Stromsammelschienensystem verwendet werden kann. Das Stromsammelschienenmodul 6 besteht aus einem elektrisch leitfähigen Material, beispielsweise Kupfer. Entlang der Längsrichtung des Stromsammelschienenmoduls 6 befinden sich eine Vielzahl von Kontaktöffnungen 5. Die Kontaktöffnungen 5 weisen bei einer möglichen Ausführungsform einen Abstand von 4,5 mm auf und sind 2,2 mm breit. Die Kontaktöffnungen 5 sind bei einer möglichen Ausführungsform Kontaktschlitze und besitzen bei einer möglichen Ausführungsform eine Schlitzlänge von etwa 15 mm. Bei alternativen Ausführungsformen sind andere Abmessungen und Teilungen der Kontaktöffnungen 5 möglich. In die Kontaktöffnungen 5 des länglich ausgebildeten und elektrisch leitfähigen Stromsammelschienenmoduls 6 können V-förmige oder fingerförmige Anschlusskontakte 13 unterschiedlicher Abmessungen der jeweiligen Geräte 11 eintauchen bzw. einrasten. Die Anschlusskontakte 13 können von der Stromsammelschiene 6 entweder Strom bzw. Spannung abgreifen oder Strom bzw. Spannung in die Stromsammelschiene 6 einspeisen. Bei dem in Fig. 3A dargestellten Ausführungsbeispiel ist das elektrisch leitfähige Stromsammelschienenmodul 6 flach ausgebildet.

Bei dem in Fig. 3B dargestellten Ausführungsbeispiel weist das Stromsammelschienenmodul 6 ein U-förmiges Querprofil auf, wobei zwei gegenüberliegende Seitenwangen 6A, 6B über einen Verbindungssteg 6C miteinander verbunden sind. In den Verbindungssteg 6C sind die Kontaktöffnungen bzw. Kontaktschlitze 5 des Kontaktöffnungsrasters zum Einstecken gefederter elektrischer Anschlusskontakte eines anzuschließenden Gerätes 11 vorgesehen. Das U-förmige Querprofil mit den zwei gegenüberliegenden Seitenwangen 6A, 6B ist vorzugsweise zur Leitung eines elektrischen Stromes mit einer vorgegebenen maximalen Stromamplitude Iₘₐₓ ausgelegt. Bei einer möglichen Ausführungsform beträgt der maximale Nennstrom des Stromsammelschienensystems je nach Ausbaustufe bis zu ca. 250 Ampere. Je größer die Querschnittsfläche des elektrisch leitfähigen Stromsammelschienenmoduls 6, desto höher sind die möglichen Nennströme des Stromsammelschienensystems. Die Schenkellängen H der beiden Seitenwangen bzw. Seitenschenkel 6A, 6B des U-förmigen Stromsammelschienenmoduls 6 können je nach Anwendungsfall variieren.

Fig. 3C zeigt ein weiteres Ausführungsbeispiel eines elektrisch leitfähigen Stromsammelschienenmoduls 6 mit im Vergleich zu der Ausführungsform in Fig. 3B längeren Seitenwangen bzw. Seitenschenkeln 6A, 6B. Die Höhe H und die Breite B des Stromsammelschienenmoduls 6 mit U-förmigem Querschnittsprofil können in verschiedenen Ausführungsformen variieren und werden in Abhängigkeit des jeweiligen Anwendungsfalls bzw. maximalen Nennstroms des Stromsammelschienensystems ausgewählt.

Fig. 3D zeigt eine weitere mögliche Ausführungsform eines elektrisch leitfähigen Stromsammelschienenmoduls 6, wie es bei dem erfindungsgemäßen Stromsammelschienensystem verwendet werden kann. Bei dem in Fig. 3D dargestellten Ausführungsbeispiel sind die beiden Enden der beiden gegenüberliegenden Seitenschenkel 6A, 6B zueinandergeklappt, sodass sich ein nahezu ringförmiges Querschnittsprofil für das Stromsammelschienenmodul 6 ergibt.

Fig. 4A zeigt ein weiteres Ausführungsbeispiel eines elektrisch leitfähigen Stromsammelschienenmoduls 6 mit darin vorhandenen gleichmäßig beabstandeten Kontaktöffnungen bzw. Kontaktschlitzen 5, in die jeweils verschiedenartige elektrische Anschlusskontakte 13 verschiedenartiger elektrischer Geräte 11 einsteckbar sind. Fig. 4A zeigt sechs verschiedene Ausführungsvarianten 13a bis 13f für mögliche elektrische Anschlusskontakte 13, welche durch die Durchführöffnungen 7, insbesondere Durchführschlitze, hindurch in die Kontaktschlitze 5 eines Stromsammelschienenmoduls 6 einsteckbar sind.

Fig. 4B zeigt die verschiedenen Varianten 13a bis 13g der elektrischen Anschlusskontakte 13-i im uneingesteckten Zustand.

Fig. 2 zeigt das in Fig. 1 dargestellte Ausführungsbeispiel eines berührungsgeschützten Grundplattenmoduls 1 mit entferntem Abdeckteil bzw. entfernter Abdeckplatte 2, sodass die in dem berührungsgeschützten Grundplattenmodul 1 eingesetzten verschiedenen Stromsammelschienenmodule 6-1, 6-2, 6-3 sichtbar sind. Bei dem in Fig. 2 dargestellten Ausführungsbeispiel sind in das Unterteil 3 des Grundplattenmoduls 1 drei verschiedene elektrisch leitfähige Stromsammelschienenmodule 6-1, 6-2, 6-3 eingesetzt bzw. eingelegt. Die drei verschiedenen elektrisch leitfähigen Stromsammelschienenmodule 6 sind für drei verschiedene Stromphasen L1, L2, L3 eines mehrphasigen Stromversorgungssystems vorgesehen. Die in Fig. 2 dargestellten Stromsammelschienenmodule 6-i können eine der in den Figuren 3A bis 3D dargestellten Querschnittsformen annehmen. Bei einer möglichen Ausführungsform wird das berührungsgeschützte Grundplattenmodul 1 bei seiner Herstellung für den jeweiligen Anwendungsfall des Stromsammelschienensystems vorkonfiguriert. Geeignete Stromsammelschienen 6-i mit einem passenden Querschnitt, welcher für den benötigten Nennstrom geeignet ist, und/oder geeigneten Kontaktöffnungsraster werden in das Unterteil 3 des Grundplattenmoduls 1 eingesetzt und anschließend wird das Oberteil bzw. die Abdeckplatte 2 fest mit dem Unterteil 3 verbunden. Bei einer möglichen Ausführungsvariante des berührungsgeschützten Grundplattenmoduls 1 wird das Oberteil 2 unlösbar mit dem Unterteil 3 beispielsweise durch Verschweißen verbunden, sodass ein Nutzer selbst mit Werkzeug das Oberteil 2 nicht mehr von dem Unterteil 3 entfernen kann. Bei einer alternativen Ausführungsform wird das Oberteil 2 mit dem Unterteil 3 mit einem Befestigungsmittel, beispielsweise mit Schrauben, fest verbunden, sodass ein Nutzer noch die Möglichkeit hat, mit einem Werkzeug, insbesondere ein Schraubenzieher, das Oberteil 2 wieder von dem Unterteil 3 zu entfernen. Bei dieser Ausführungsvariante hat der Nutzer bzw. Kunde die Möglichkeit, die elektrisch leitfähigen Stromsammelschienenmodule 6 innerhalb des berührungsgeschützten Grundplattenmoduls 1 für verschiedene Anwendungsfälle bzw. Anlagen auszutauschen.

Bei dem in Fig. 2 dargestellten Ausführungsbeispiel weist das berührungsgeschützte Grundplattenmodul 1 mehrere darin angeordnete Stromsammelschienenmodule auf, wobei für jede Stromphase L1, L2, L3 jeweils ein Stromsammelschienenmodul 6-1, 6-2, 6-3 vorgesehen ist. Bei einer möglichen Ausführungsvariante wird eine Stromsammelschiene, die für eine Stromphase L des mehrphasigen Stromsammelschienensystems vorgesehen ist, durch mehrere miteinander stirnseitig aneinander angereihte Stromsammelschienenmodule 6-i innerhalb des berührungsgeschützten Grundplattenmoduls 1 gebildet. Weiterhin kann das berührungsgeschützte Grundplattenmodul 1 bei einer möglichen Ausführungsform mithilfe mechanischer Verbindungselemente mit weiteren berührungsgeschützten Grundplattenmodulen 1 zur Erweiterung des Stromsammelschienensystems verbunden werden. Dabei werden die innerhalb der verschiedenen berührungsgeschützten Grundplattenmodule 1 enthaltenen Stromsammelschienenmodule 6 elektrisch miteinander kontaktiert, um auf diese Weise eine durchgehende elektrisch leitfähige lange Stromsammelschiene zu bilden. Das Oberteil bzw. die Abdeckplatte 2 zeigt in Einbaulage nach vorne und bildet die Frontseite für einen Nutzer, der Geräte 11 in das Grundplattenmodul 1 einsetzt bzw. davon entfernt.

Das in Fig. 1, 2 dargestellte berührungsgeschützte Grundplattenmodul 1 kann vertikal oder horizontal innerhalb eines Schaltschrankes verbaut oder darin integriert werden. Dabei kann das berührungsgeschützte Grundplattenmodul 1 bei einer möglichen Ausführungsvariante vorgegebene Standardlängen bzw. Standardabmessungen besitzen, beispielsweise Standardlängen von 135 mm, 225 mm, 315 mm, 405 mm oder 495 mm.

Wie in Fig. 1 dargestellt, besitzt die Oberseite bzw. die Abdeckplatte 2 des berührungsgeschützten Grundplattenmoduls 1 mehrere Reihen 4-1, 4-2, 4-3 von Durchführöffnungen 7, die unmittelbar über den Kontaktöffnungen 5 der in dem Grundplattenmodul 1 enthaltenen Stromsammelschienenmodule 6-1, 6-2, 6-3, wie sie in Fig. 2 dargestellt sind, liegen.

Das Unterteil 3 des berührungsgeschützten Grundplattenmoduls 1 besitzt vorzugsweise an seiner Rückseite Befestigungsmittel zur Befestigung des berührungsgeschützten Grundplattenmoduls 1 auf eine Tragschiene, insbesondere eine DIN-Tragschiene, und/oder auf eine Montageplatte. Die Stromsammelschienen sind mit dem Oberteil 2 bzw. einem berührungsgeschützten Abdeckdeckel abgedeckt, der das gleiche Schlitzraster besitzt wie die geschlitzten Stromsammelschienen 6. In dem Oberteil 2 befinden sich bei einer möglichen Ausführungsform Konturen bzw. Durchführschlitze 7 in einem Rasterabstand bzw. einem Kontaktöffnungsraster von ebenfalls 4,5 mm entsprechend dem Kontaktöffnungsraster der darunterliegenden in dem berührungsgeschützten Grundplattenmodul 1 enthaltenen Stromsammelschienenmodule 6.

Wie in Fig. 4A dargestellt, werden bei einer bevorzugten Ausführungsform jeweils zwei rechteckförmig ausgebildete Konturen bzw. Kontaktschlitze 5 der Stromsammelschienenmodule 6 für einen Anschlusskontakt 13 eines Gerätes 11 verwendet, damit das Gerät elektrisch durch Einstecken mit dem Stromsammelschienensystem verbunden sind. Bei den in den Figuren 4A dargestellten Ausführungsvarianten der Anschlusskontakte 13 besitzen diese in einer möglichen Variante fingerförmige Kontakte, die in zwei nebeneinander liegende Kontaktschlitze 5 des Stromsammelschienenmoduls 6 eingreifen oder diese hintergreifen. Die in Fig. 4A dargestellten elektrischen Anschlusskontakte 13-i der elektrischen Geräte dienen somit nicht nur der elektrischen Kontaktierung der Stromsammelschienenmodule 6, sondern gleichzeitig auch zur mechanischen Verbindung bzw. mechanischen Stützung der an das Stromsammelschienensystem angeschlossenen Geräte 11. Vorzugsweise wird die mechanische Fixierung durch Kontaktschutzrippen übernommen und der elektrische Anschlusskontakt 13 hierdurch entlastet und geschützt.

Bei dem in Fig. 1 dargestellten Ausführungsbeispiel besitzt das berührungsgeschützte Grundplattenmodul 1 eine Abdeckplatte bzw. ein Oberteil 2 mit drei parallel zueinander verlaufenden Reihen 4-1, 4-2, 4-3 von Durchführöffnungen 7, die zum Durchführen von Anschlusskontakten 13 elektrischer Geräte 11 dienen. Daneben verfügt die Abdeckplatte bzw. das Oberteil 2 des berührungsgeschützten Grundplattenmoduls 1 bei dem in Fig. 1 dargestellten Ausführungsbeispiel über zwei Reihen 8-1, 8-2 mit Konturen bzw. Schlitzen, die für die Aufnahme von Verriegelungen der installierten Geräte 11 vorgesehen sind, damit diese mechanisch mit dem berührungsgeschützten Grundplattenmodul 1 verbunden werden können. Die Verriegelung sichert die Geräte 11 gegen Abziehen nach vorne. Die Kontaktschutzrippen sichern das Gerät 11 in Schwerkraftrichtung. Darüber hinaus ist bei der in Fig. 1 dargestellten Ausführungsform eine weitere Reihe 9 von Konturen bzw. Schlitzen vorgesehen, in die sogenannte Verpolschutzrippen 32 der angeschlossenen Geräte 11 eintauchen können. Die Konturen bzw. Schlitze der Reihe 9 innerhalb des Oberteils 2 des berührungsgeschützten Grundplattenmoduls 1 verhindern, dass elektrische Geräte falsch bzw. falsch gepolt auf das berührungsgeschützte Grundplattenmodul 1 aufgesteckt werden können. Durch die spezielle Anordnung der verschiedenen Durchführschlitze 7, der Verriegelungskonturen sowie der Verpolschutzkonturen für die Verpolschutzrippen 32 der Geräte 11 kann das gesamte berührungsgeschützte Grundplattenmodul 1 mit elektrischen Geräten 11 bestückt werden, ohne dass links oder rechts Montageplatz verloren geht. Bei einem Schlitzabstand von beispielsweise 4,5 mm ergeben sich somit folgende sinnvolle Breiten der Gerätegehäuse, nämlich beispielsweise 18 mm, 22,5 mm, 27 mm, 36 mm sowie 45 mm. Die Gehäusebreite von 18 mm stellt ein Standardmaß für Sicherungsautomaten dar. Eine Gehäusebreite von 22,5 mm besitzen verschiedene elektronische oder elektrische Geräte 11 bzw. Module, 22,5 und Geräte zum Einspeisen von elektrischem Strom.. Weiterhin sind Schaltgeräte 11 mit einer Standardgerätebreite ihres Gehäuses von 27 mm, 36 mm oder 45 mm oder 54 mm bekannt. Die Geräteschnittstellen zum berührungsgeschützten Grundplattenmodul 1 sind vorzugsweise derart ausgelegt, dass alle Geräte 11 mit derartigen herkömmlichen Gerätebreiten ohne Abstand zueinander auf dem berührungsgeschützten Grundplattenmodul 1 lückenlos aneinandergereiht werden können, sodass an der Front- bzw. Stirnseite des berührungsgeschützten Grundplattenmoduls 1 kein Platz verloren geht.

Das erfindungsgemäße berührungsgeschützte Stromsammelschienensystem bietet somit ein hochintegriertes vorgefertigtes Stromsammelschienensystem, das aus berührungsgeschützten Grundplattenmodulen 1 zusammengesetzt werden kann, welches die Stromsammelschienen bereits beinhaltet und einen sicheren Berührungsschutz gewährleistet. Bei einer möglichen Ausführungsform des erfindungsgemäßen Stromsammelschienensystems weist das berührungsgeschützte Grundplattenmodul 1 einen IP20-Berührungsschutz auf. Bei einer weiteren möglichen Ausführungsform des erfindungsgemäßen Stromsammelschienensystems weist das berührungsgeschützte Grundplattenmodul 1 einen IP30-Berührungsschutz auf. Durch zusätzliche Abdeckungen kann ein Berührungsschutz IP40 erreicht werden. Durch die Reihe 9 von Codierungs- bzw. Verpolschutzschlitzen kann ein irrtümliches Verdrehen der anzuschließenden Geräte 11 sicher verhindert werden. Die bei dem erfindungsgemäßen Stromsammelschienensystem verwendeten Stromsammelschienenmodule 6 besitzen im Vergleich zu herkömmlichen Stromsammelschienen darin integrierte Kontaktöffnungen 5, die eine elektrische Kontaktierung der Geräte mit dem Stromsammelschienensystem gewährleisten. Die Geräte können mit dem Stromsammelschienensystem ohne Nutzung von Werkzeugen verbunden und wieder davon entfernt werden. Lediglich für das Betätigen eines Rastelementes des Gerätes kann ggf. ein Schlitzschraubendreher verwendet werden.

Bei einer möglichen Ausführungsform des erfindungsgemäßen Stromsammelschienensystems kann das berührungsgeschützte Grundplattenmodul 1 schockdämpfende und/oder vibrationsdämpfende Verbindungselemente zur mechanischen Abstützung von Geräten aufweisen. Diese können an die mechanischen Schnittstellen angebracht werden. An das berührungsgeschützte Grundplattenmodul 1 können ferner Einspeisebauelemente zur Stromeinspeisung bzw. Spannungseinspeisung an das Stromsammelschienensystem angebracht oder integriert sein. Weiterhin kann eine Verriegelung gegen auftretende Vibrationen und gegen unbeabsichtigtes Abziehen vorgesehen werden. Bei einer weiteren möglichen Ausführungsvariante sind in dem Kunststoffgehäuse bzw. in dem berührungsgeschützten Grundplattenmodul 1 Kühlkörperstrukturen zum Einsetzen von Kühlelementen vorgesehen. Weiterhin kann das berührungsgeschützte Grundplattenmodul 1 bei einer möglichen Ausführungsvariante Belüftungsöffnungen besitzen, sodass Luft in das berührungsgeschützte Grundplattenmodul 1 ein- oder austreten kann. Weiterhin besitzt das berührungsgeschützte Grundplattenmodul 1 bei einer möglichen Ausführungsform Öffnungen für Kabeldurchführungen.

Bei einer möglichen Ausführungsform des erfindungsgemäßen Stromsammelschienensystems enthält das berührungsgeschützte Grundplattenmodul 1 neben Stromsammelschienenmodulen 6 elektrische Datenleitungen zur Kommunikation zwischen den an den Stromsammelschienen angeschlossenen Geräten. Zwischen den Stromsammelschienen können Datenleitungen zur Vernetzung verlegt sein, bei denen die Geräte 11 miteinander verbunden sind und miteinander kommunizieren. Weiterhin können spezielle Steckkonturen für die Kontaktierung der in dem berührungsgeschützten Grundplattenmodul 1 vorgesehenen Datenleitungen vorgesehen sein.

Bei einer weiteren möglichen Ausführungsvariante des erfindungsgemäßen Stromsammelschienensystems kommunizieren die an dem Stromsammelschienensystem angeschlossenen Geräte mittels Powerlinekommunikation PLC (PowerLAN oder dLAN) miteinander direkt über die in dem berührungsgeschützten Grundplattenmodul 1 enthaltenen Stromsammelschienen 6. Dabei besitzen die in die Stromsammelschienen eingesteckten Geräte 11 jeweils einen Transceiver zum Austausch von Informationsdaten mittels Powerline Communication PLC über die elektrisch leitfähigen Stromsammelschienenmodule 6. Vorzugsweise werden zur Datenübertragung des Frequenzbereichs von 50 bis 500kHz und/oder von 16 MHz bis 30MHz genutzt. Im unteren Frequenzbereich können Datenraten von bis zu 2,5Mbit/sec erreicht werden, während im oberen Frequenzbereich bis zu 14Mbit/sec erreicht werden können.

Bei einer weiteren möglichen Ausführungsform des erfindungsgemäßen Stromsammelschienensystems kommunizieren die an das Stromsammelschienensystem angeschlossenen Geräte 11 miteinander über eine separate drahtlose Funkschnittstelle.

Bei einer weiteren möglichen Ausführungsvariante erfolgt die Kommunikation zwischen den angeschlossenen Geräten 11 über verschiedene Kommunikationskanäle mittels elektrischer Datenleitungen, mittels Powerlinekommunikation und/oder mittels drahtloser Kommunikation über Funkschnittstellen. Die Funkschnittstellen umfassen beispielsweise eine WLAN-, Bluetooth-, ZigBee oder RFID-Schnittstelle. Insbesondere bei Funkschnittstellen erfolgt eine Kommunikation der Geräte 11 unter anderem auch zu externen Sendern und Empfängern, wie etwa Smartphones, um Daten und Parameter austauschen und einstellen zu können.

Bei einer weiteren möglichen Ausführungsform des erfindungsgemäßen Stromsammelschienensystems sind in dem berührungsgeschützten Grundplattenmodul 1 Messmodule zur Strom- und Spannungsmessung an den in dem Grundplattenmodul 1 enthaltenen Stromsammelschienenmodulen 6 vorgesehen. Diese Messmodule dienen bei einer möglichen Ausführungsform zur Erkennung von Überströmen oder Kurzschlüssen innerhalb des Stromsammelschienensystems.

Bei einer weiteren möglichen Ausführungsform des erfindungsgemäßen Stromsammelschienensystems enthält das berührungsgeschützte Grundplattenmodul 1 neben Stromsammelschienenmodulen 6 elektrische Versorgungsleitungen zur Übertragung von Hilfsversorgungsspannungen für die in dem berührungsgeschützten Grundplattenmodul 1 vorgesehenen Messmodule oder für die an den Stromsammelschienenmodulen 6 angeschlossenen Geräte 11.

Bei einer weiteren möglichen Ausführungsvariante sind innerhalb des berührungsgeschützten Grundplattenmoduls 1 Kühlleitungen bzw. Kühlkamine zur Abführung von Abwärme aus dem Inneren des berührungsgeschützten Grundplattenmoduls 1 vorgesehen, die im eingebauten Zustand des Grundplattenmoduls 1 vertikal verlaufen. Bei einer möglichen Ausführungsform bestehen das Oberteil 2 und das Unterteil 3 des berührungsgeschützten Grundplattenmoduls 1 aus einem wärmeleitfähigen Kunststoff zur besseren Abführung entstehender Wärme. Bei einer weiteren möglichen Ausführungsform des erfindungsgemäßen Stromsammelschienensystems ist das berührungsgeschützte Grundplattenmodul 1 mit Zusatzmodulen für Neutralleiter, N- oder PE-Leiter oder für Datenleitungen erweiterbar. Diese Zusatzmodule können bei einer möglichen Ausführungsform oben und/oder unten an das berührungsgeschützte Grundplattenmodul 1 angebracht werden. Für das Anbringen sind spezielle Konturen an dem Grundplattenmodul 1 vorgesehen. Diese Konturen sind so ausgeführt, dass eine Erweiterung mit Zusatzmodulen auch möglich ist, wenn das Grundplattenmodul 1 bereits auf einer Hutschiene oder einer Montageplatte im Schaltschrank eingebaut ist.

Bei einer weiteren möglichen Ausführungsform des erfindungsgemäßen Stromsammelschienensystems ist das berührungsgeschützte Grundplattenmodul 1 in ein Schaltschrankgehäuse zur Aufnahme mehrerer Geräte 11 integriert, die in die Kontaktschlitze des Kontaktöffnungsrasters der in dem berührungsgeschützten Grundplattenmodul 1 enthaltenen Stromsammelschienenmodule 6 eingesteckt sind.

Weitere Ausführungsvarianten des erfindungsgemäßen Stromsammelschienensystems sind möglich. Bei einer möglichen Ausführungsvariante weist das Stromsammelschienensystem einen modularen Aufbau auf. Bei einer möglichen Ausführungsform besitzt das Stromsammelschienensystem mindestens ein Strom-Einspeisemodul, das zum Einspeisen verschiedener elektrischer Stromphasen L in das Stromsammelschienensystem vorgesehen ist. Das Strom-Einspeisemodul speist verschiedene elektrische Stromphasen L in die in dem berührungsgeschützten Grundplattenmodul 1 parallel angeordneten jeweils aus mindestens einem Stromsammelschienenmodul 6 zusammengesetzten Stromsammelschienen ein. Dabei kann das Strom-Einspeisemodul bei einer möglichen Ausführungsform für jede in dem berührungsgeschützten Grundplattenmodul 1 parallel angeordnete Stromsammelschiene einen berührungsgeschützten Anschlusszapfen mit elektrischen Anschlusskontakten zum Einstecken in Kontaktschlitze eines Stromsammelschienenmoduls 6 aufweisen. Weiterhin kann das Stromsammelschienensystem bei einer modular ausgeführten Ausführungsvariante berührungsgeschützte Brückenmodule umfassen. Dabei weist ein berührungsgeschütztes Brückenmodul des Stromsammelschienensystems beiderseitig jeweils mehrere Anschlusskontakte zum Einstecken in Kontaktöffnungen 5 auf, die sich an Enden zweier jeweils durch ein Deckelmodul abgedeckter länglich ausgebildeter und elektrisch leitfähiger benachbarter Stromsammelschienenmodule 6 einer Stromsammelschiene des Stromsammelschienensystems befinden. Das berührungsgeschützte Brückenmodul besitzt dabei vorzugsweise beiderseits mittig angeordnete Durchführöffnungen 7 zum Hindurchführen von Anschlusskontakten 13 von Geräten, die zum Anschließen des Gerätes an das Stromsammelschienensystem in Kontaktöffnungen 5 des Kontaktöffnungsrasters der beiden durch das Brückenmodul zusammengesetzten elektrisch leitfähigen Stromsammelschienenmodule 6 einsteckbar sind. Weiterhin kann das Stromsammelschienensystem bei der modularen Ausführungsvariante berührungsgeschützte Endkappenmodule umfassen. Ein berührungsgeschütztes Endkappenmodul des Stromsammelschienensystems weist dabei mehrere Anschlusskontakte zum Einstecken in Kontaktöffnungen 5 des Kontaktöffnungsrasters auf, die sich an einem Ende eines durch ein berührungsgeschütztes Deckelmodul abgedeckten länglich ausgebildeten und elektrisch leitfähigen Stromsammelschienenmoduls einer Stromsammelschiene des Stromsammelschienensystems befinden. Das berührungsgeschützte Endkappenmodul besitzt vorzugsweise mittig angeordnete Durchführöffnungen 7 zum Hindurchführen von Anschlusskontakten, die zum Anschließen eines Gerätes an das Stromsammelschienensystem in Kontaktöffnungen 5 des Kontaktöffnungsrasters einsteckbar sind, die unterhalb des berührungsgeschützten Endkappenmoduls liegen. Das Stromsammelschienensystem besitzt bei der modularen Ausführungsvariante berührungsgeschützte länglich ausgebildete Deckelmodule. Das berührungsgeschützte länglich ausgebildete Deckelmodul des Stromsammelschienensystems weist vorzugsweise an seinen beiden Enden jeweils eine Aussparung auf, die dazu vorgesehen ist, ein Endkappenmodul, eine Seite eines Brückenmoduls oder einen Anschlusszapfen eines Strom-Einspeisemoduls des Stromsammelschienensystems in Kontaktöffnungen 5 des Kontaktöffnungsrasters elektrisch leitfähiger Stromsammelschienen 6 des Stromsammelschienensystems formbündig zur Bildung einer berührungsgeschützten Abdeckplatte des berührungsgeschützten Grundplattenmoduls 1 einzustecken.

Bei einer weiteren möglichen Ausführungsvariante des erfindungsgemäßen Stromsammelschienensystems ist ein an das Stromsammelschienensystem anzuschließendes Gerät 11 in die aus den Stromsammelschienenmodulen 6 zusammengesetzten Stromsammelschienen des Stromsammelschienensystems zur Herstellung einer mechanischen Verbindung aufrastbar. Bei einer möglichen Ausführungsform weist das an das Stromsammelschienensystem anzuschließende Gerät 11 zusätzlich Rastmittel auf, die auf parallel zu den Stromsammelschienen 6 verlaufende Raststege des berührungsgeschützten Grundplattenmoduls 1 des Stromsammelschienensystems aufrastbar sind. Die Rastmittel des an das Stromsammelschienensystem anzuschließenden Gerätes 11 weisen bei einer möglichen Ausführungsform Rastnasen auf, die zum Entriegeln und Verriegeln der mechanischen Verbindung an ein manuell betätigbares Rastmittel des anzuschließenden Gerätes 11 angebracht sind, der zu den Stromsammelschienen des Stromsammelschienensystems innerhalb eines Gehäuses des anzuschließenden Gerätes 11 lateral verschiebbar ist. Bei dem an das Stromsammelschienensystem anschließbaren Gerät 11 handelt es sich um ein elektrisches, elektronisches oder elektromechanisches Gerät, das zur Herstellung einer elektrischen Verbindung mit dem Stromsammelschienensystem elektrische Anschlusskontakte und zur Herstellung einer zusätzlichen mechanischen Verbindung Rastmittel besitzt. Weiterhin können an dem Gehäuse des elektrischen Gerätes 11 Verpolschutzrippen zum korrekten Anschließen an das Stromsammelschienensystem vorgesehen sein.

Die Erfindung schafft gemäß einem weiteren Aspekt somit ein Gerät 11, insbesondere ein Schaltgerät, wie beispielsweise einen Motorschutzschalter oder einen Leistungsschutzschalter, die für ein erfindungsgemäßes Stromsammelschienensystem verwendbar ist und vorzugsweise ein Gehäuse besitzt, das über geeignete elektrische Anschlusskontakte 13 verfügt, die in die Kontaktöffnungen 5 des Kontaktöffnungsrasters einsteckbar sind.

Das erfindungsgemäße Gerät 11 besitzt bei einer möglichen Ausführungsform an seinem Gehäuse 12 zusätzlich Verpolschutzrippen 32, die ein fehlerhaftes Einstecken bzw. Anschließen an das Stromsammelschienensystem verhindern. Das erfindungsgemäße Gerät 11 besitzt bei einer weiteren möglichen Ausführungsform zusätzlich mechanische Rastmittel 16 zur Herstellung einer mechanischen Verbindung mit dem Stromsammelschienensystem. Bei dem anschließbaren Gerät 11 kann es sich bei einer möglichen Ausführungsform um ein Motorsteuergerät, ein Schutzgerät, ein Messgerät, ein Adaptergerät oder ein sonstiges Gerät handeln. Bei einer weiteren möglichen Ausführungsform des erfindungsgemäßen Stromsammelschienensystems besitzt das berührungsgeschützte Grundplattenmodul 1 des Stromsammelschienensystems erste Stromsammelschienenmodule für verschiedene Stromphasen L des Stromsammelschienensystems und zweite andersartig geformte Stromsammelschienenmodule für Schutzleiter P, N des Stromsammelschienensystems. Dabei weisen die ersten Stromsammelschienenmodule für die Stromphasen L vorzugsweise ein U-förmiges Querprofil mit zwei einander gegenüberliegenden Seitenwangen auf, die zur elektrischen Leitung einer Stromphase L mit einer vorgegebenen maximalen Stromamplitude ausgelegt sind.

Bei einer weiteren möglichen Ausführungsvariante des erfindungsgemäßen Stromsammelschienensystems kann das berührungsgeschützte Grundplattenmodul 1 in einem Kleinverteilergehäuse integriert sein. Bei einer möglichen Ausführungsvariante ist das Unterteil 3 des berührungsgeschützten Grundplattenmoduls 1 in das Kleinverteilergehäuse integriert. Bei einer weiteren möglichen Ausführungsvariante ist das gesamte berührungsgeschützte Grundplattenmodul 1 in das Kleinverteilergehäuse integriert bzw. daran befestigt. Die Stromeinspeisung in das Stromsammelschienensystem kann von der Vorderseite des Grundplattenmoduls 1 oder von der Hinterseite des Grundplattenmoduls 1 erfolgen. Dies gilt auch für Grundplattenmodule, die nicht in ein Kleinverteilergehäuse integriert sind.

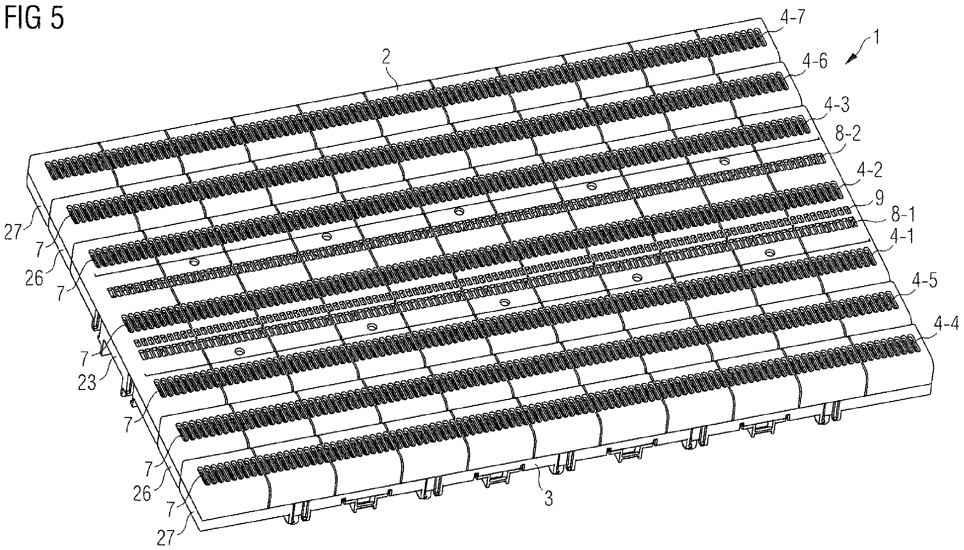

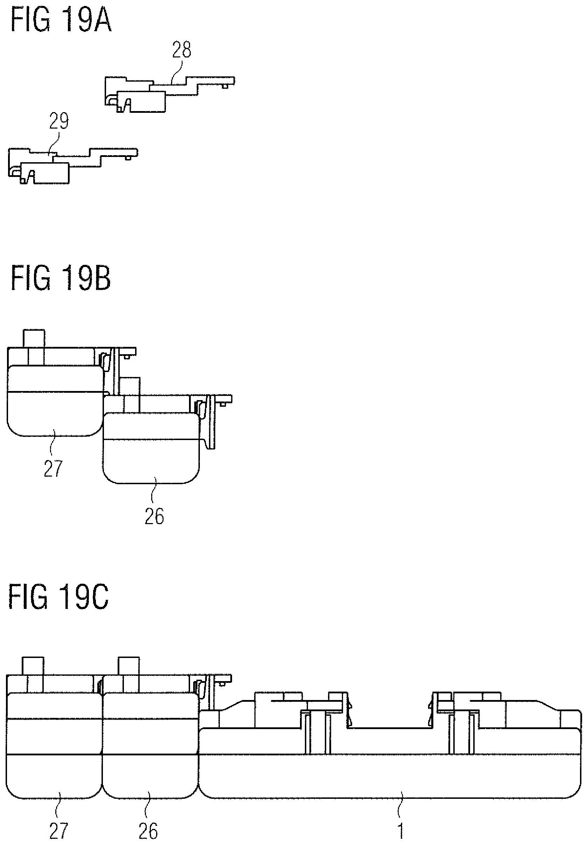

Fig. 5 zeigt perspektivisch ein weiteres Ausführungsbeispiel für ein berührungsgeschütztes Grundplattenmodul 1, wie es bei dem erfindungsgemäßen Stromsammelschienensystem verwendet werden kann. Bei dem in Fig. 5 dargestellten Ausführungsbeispiel verfügt das berührungsgeschützte Grundplattenmodul 1 ähnlich zu dem in Fig. 1 dargestellten Grundplattenmodul über ein zentrales bzw. mittig angeordnetes Kernbauelement, an dessen Rückseite bzw. Hinterteil 3 sich mechanische Befestigungsmittel zur Befestigung an eine Trägerschiene oder eine Montageplatte befinden. Das berührungsgeschützte Grundplattenmodul 1 besitzt bei dem dargestellten Ausführungsbeispiel in der Mitte drei parallel verlaufende Reihen 4-1, 4-2, 4-3 mit einer Vielzahl gleichmäßig beabstandeter Durchführöffnungen 7, unter denen sich jeweils eine zugehörige gleich geformte Kontaktöffnung 5 des Kontaktöffnungsrasters befindet. Oben und unten sind weitere Reihen 4-4, 4-5, 4-6, 4-7 mit Durchführöffnungen 7 vorgesehen, unter denen sich ebenfalls Stromsammelschienenmodule 6 mit entsprechend beabstandeten Kontaktöffnungen 5 des Kontaktöffnungsrasters befinden. Bei dem in Fig. 5 dargestellten Ausführungsbeispiel beinhaltet das berührungsgeschützte Grundplattenmodul 1 somit insgesamt sieben darin integrierte parallel angeordnete Stromsammelschienen. Bei einer möglichen Ausführungsvariante sind die beiden oberen Stromsammelschienenmodule bzw. Stromsammelschienen und die beiden unteren Stromsammelschienenmodule bzw. Stromsammelschienen in separaten Zusatzmodulen 26, 27 enthalten, die mit einem zentralen berührungsgeschützten Grundplattenmodul 1 mechanisch verbunden sind, wie es beispielsweise in Fig. 1 dargestellt ist. Das Anbringen von Zusatzmodulen bzw. Crossbars 26, 27 ist in den Figuren 19A, 19B, 19C gezeigt. Das dargestellte Beispiel entspricht einem Grundplattenmodul 1 mit vier Zusatzmodulen 26, 27. Wie man in Fig. 5 erkennen kann, kann das Stromsammelschienensystem somit durch Zusatzmodule 26, 27 für weitere Stromsammelschienen in einfacher Weise erweitert werden. Die Anzahl der parallel in den Zusatzmodulen 26, 27 vorgesehenen Stromsammelschienen kann bei verschiedenen Ausführungsvarianten des Stromsammelschienensystems variieren. Die Zusatzmodule 26, 27 können auch im eingebauten Zustand des Grundplattenmoduls 1 angebaut bzw. angerastet werden.

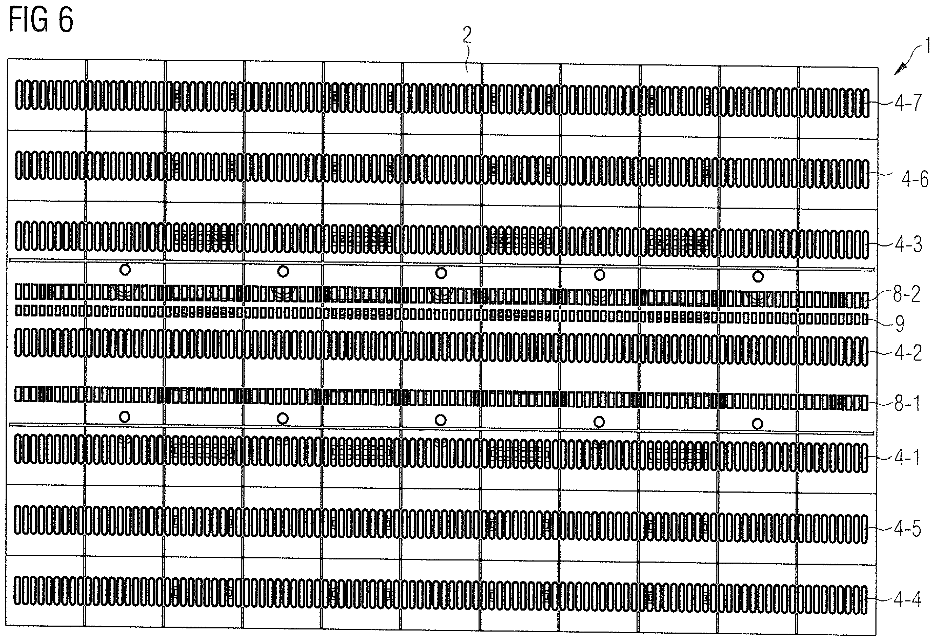

Fig. 6 zeigt eine Frontansicht auf das Oberteil 2 des in Fig. 5 dargestellten Ausführungsbeispiels eines Grundplattenmoduls 1.

Fig. 7 zeigt perspektivisch ein Ausführungsbeispiel für ein an das Stromsammelschienensystem anschließbares Gerät 11. Das Gerät 11 besitzt ein speziell geformtes Gehäuse 12, an dessen Unterseite sich für die Kontaktschlitze geeignete Steckkontakte 13-1, 13-2, 13-3 für drei Stromphasen L1, L2, L3 befinden. Ein Anschlusskontakt 13 ist immer durch zwei Kontaktschutzrippen geschützt. Pro Phase sind jedoch auch zwei oder drei nebeneinander liegende Steckkontakte möglich. Diese sind mit Kontaktschutzrippen geschützt, wie in Fig. 4A schematisch dargestellt. Die an der Unterseite des Gehäuses 12 des Gerätes 11 angebrachten Anschlusskontakte 13-i des Gerätes 11 sind bei einer möglichen Ausführungsform entsprechend einer der in Fig. 4A dargestellten sechs Ausführungsvarianten ausgebildet. Bei dem in Fig. 7 dargestellten Ausführungsbeispiel verfügt das Gerät 11 über drei Anschlusskontakte 13-1, 13-2, 13-3 für drei Stromphasen L1, L2, L3. Bei alternativen Ausführungsformen kann das Gerät 11 eine unterschiedliche Anzahl von Anschlusskontakten 13 für Stromphasen und/oder Nullleiter besitzen.

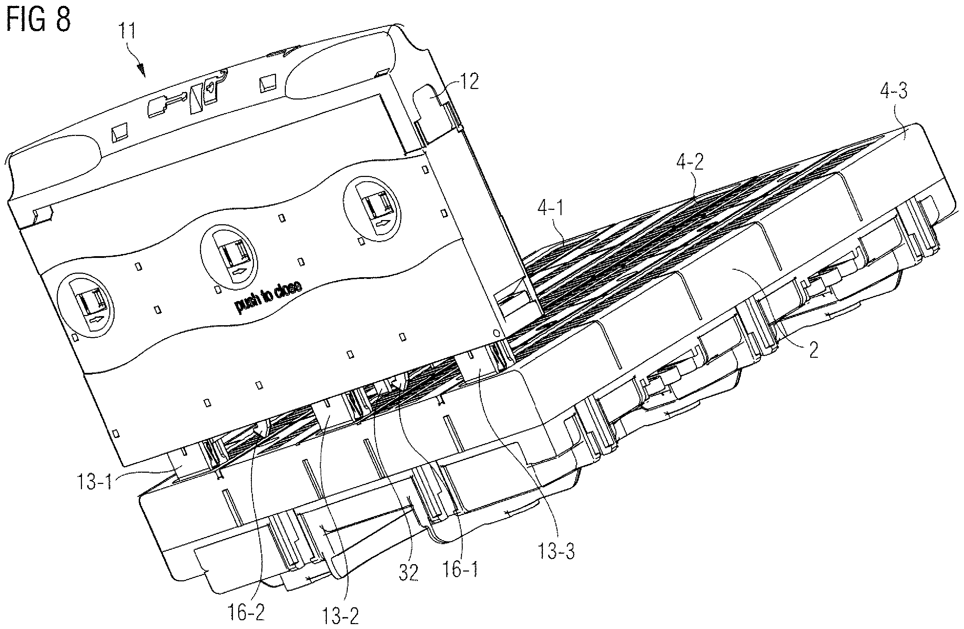

Fig. 8 verdeutlicht perspektivisch das Einstecken des in Fig. 7 dargestellten Gerätes 11 in drei entsprechende Reihen 4-1, 4-2, 4-3 eines berührungsgeschützten Grundplattenmoduls 1 des erfindungsgemäßen Stromsammelschienensystems. Das Gerät 11 kann in einfacher Weise auf das Oberteil 2 des berührungsgeschützten Grundplattenmoduls 1 aufgesetzt werden und anschließend mit relativ geringem Kraftaufwand in das berührungsgeschützte Grundplattenmodul 1 eingesteckt werden. Hierzu werden die Anschlusskontakte 13-1, 13-2, 13-3 durch die Durchführöffnungen 7 der Anschlusskontaktreihen 4-i hindurchgeführt und anschließend in die unmittelbar darunterliegenden Kontaktöffnungen 5 der drei in dem Grundplattenmodul 1 enthaltenen Stromsammelschienenmodule 6 eingesteckt, sodass eine elektrische Verbindung hergestellt ist.

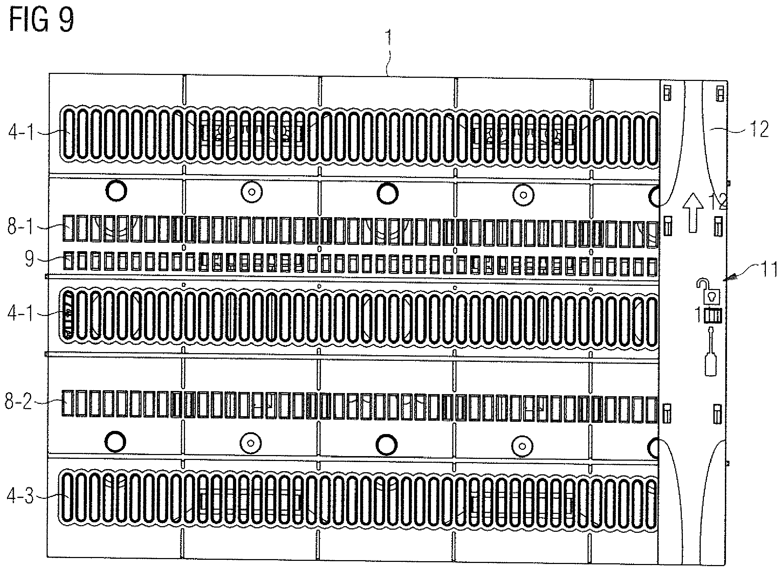

Fig. 9 zeigt das elektrische Gerät 11 mit seinem Gehäuse 12 im eingesteckten Zustand auf dem berührungsgeschützten Grundplattenmodul 1 von vorne.

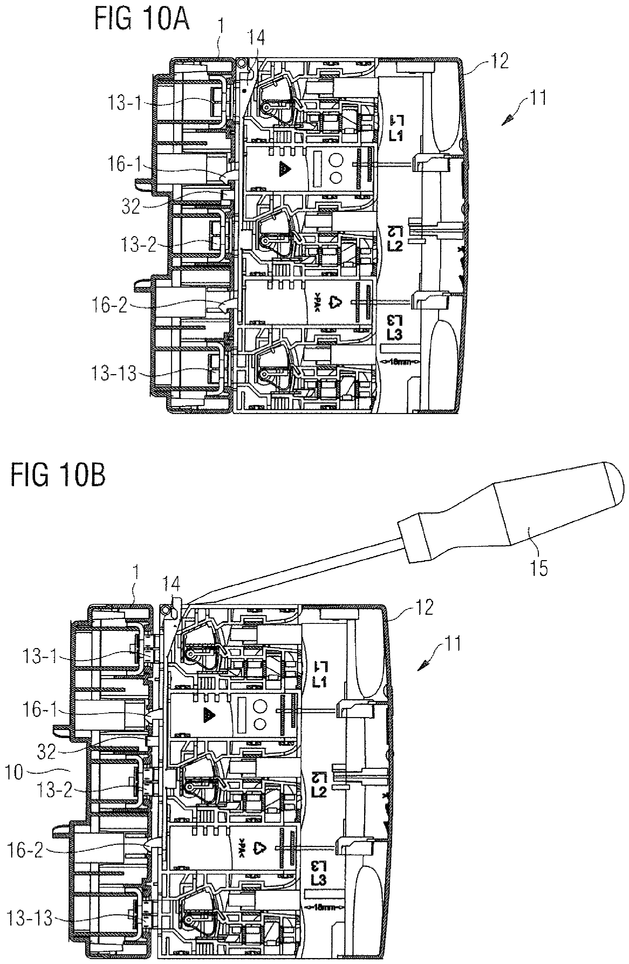

Figuren 10A, 10B zeigen Schnittansichten durch das Gehäuse 12 des Gerätes 11 zur Darstellung einer Ausführungsvariante des Gerätes 11. Bei der in den Figuren 10A, 10B dargestellten Ausführungsvariante verfügt das Gerät 11 über ein Rastelement 14. In Fig. 10A ist das Rastelement 14 im verriegelten Zustand dargestellt. Mithilfe eines Werkzeuges 15, beispielsweise eines Schraubendrehers, kann das Rastelement 14 des Gerätes 11 verschoben werden, um das Gerät 11 von dem berührungsgeschützten Grundplattenmodul 1 abzunehmen. Ferner verfügt das Gerät 11, wie in Fig. 10A dargestellt, an der Unterseite seines Gehäuses 12 über Rastnasen 16-1, 16-2, die die Abdeckplatte 2 des Grundplattenmoduls 1 im verriegelten Zustand hintergreifen. Bei einer weiteren möglichen Ausführungsvariante können die Rastnasen 16-1, 16-2 auch in Raststege des berührungsgeschützten Grundplattenmoduls 1 eingreifen. Mithilfe des Schraubendrehers 15 wird das Rastbauelement 14, wie in Fig. 10B dargestellt, nach oben gehebelt, sodass sich die Rastnasen 16-1, 16-2 von dem Deckel und/oder den Rastschienen des Grundplattenmoduls 1 lösen und das Gerät 11 von dem berührungsgeschützten Grundplattenmodul 1 entfernt werden kann. Das Gerät 11 kann ohne Betätigung des Rastbauelements 14 (Stellung Rastelement wie in Fig. 10A dargestellt) auf die Grundplatte gesteckt werden. Das Rastbauelement 14 im Gerät 11 verfügt über eine Fremd- oder Eigenfederung, die dafür sorgt, dass das Rastbauelement 14 immer in die Stellung gemäß Fig. 10A gedrückt wird. Nur zum Abnehmen des Gerätes 11 muss das Rastbauelement 14 mit einem Schlitzschraubendreher 15 nach oben gezogen werden. Bei dieser Ausführungsvariante kann ein montiertes Gerät 11 erst nach Betätigen des Rastbauelements 14 von dem berührungsgeschützten Grundplattenmodul 1 entfernt werden. Hierdurch kann ein unbeabsichtigtes Ablösen eines Gerätes 11 von dem berührungsgeschützten Grundplattenmodul 1 sicher verhindert werden.

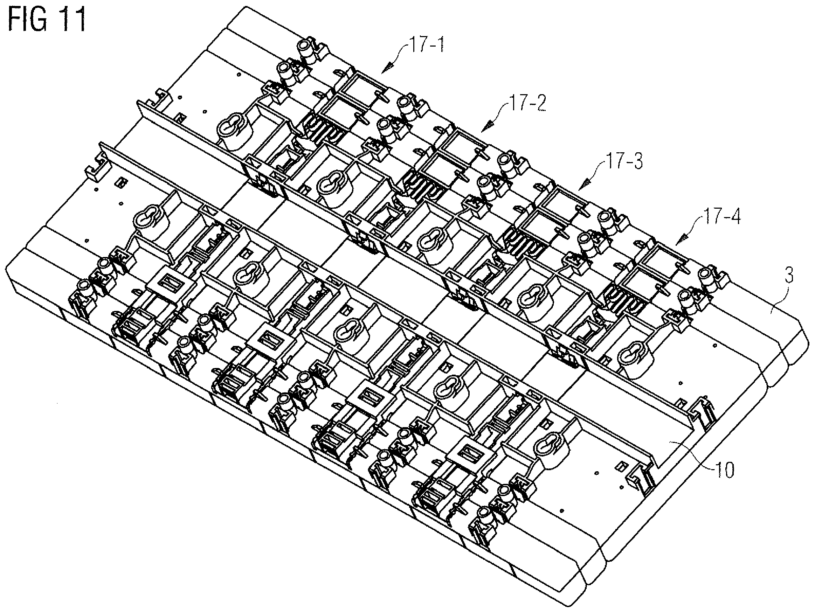

Fig. 11 zeigt perspektivisch eine Ansicht auf das Unterteil 3 des berührungsgeschützten Grundplattenmoduls 1 von hinten bzw. von der Rückseite. Das Unterteil 3 des Grundplattenmoduls 1 besitzt eine Aussparung bzw. Kontur 10 zum Aufsetzen des berührungsgeschützten Grundplattenmoduls 1 auf eine Tragschiene 23. Diese Aussparung verläuft zentral mittig in Längsrichtung des Grundplattenmoduls 1, wie in Fig. 11 dargestellt. Das Grundplattenmodul 1 kann auf eine Tragschiene, insbesondere eine Hutschiene, aufgesetzt und anschließend auf die Tragschiene aufgerastet werden. Hierzu verfügt das Unterteil 3 des berührungsgeschützten Grundplattenmoduls 1 über mehrere Rastbauelemente 17, wie in Fig. 11 dargestellt. Bei der in Fig. 11 dargestellten Ausführungsform hat das berührungslose Grundplattenmodul 1 auf seiner Rückseite vier für eine Tragschiene 23 vorgesehene Rastbauelemente 17-1, 17-2, 17-3, 17-4.

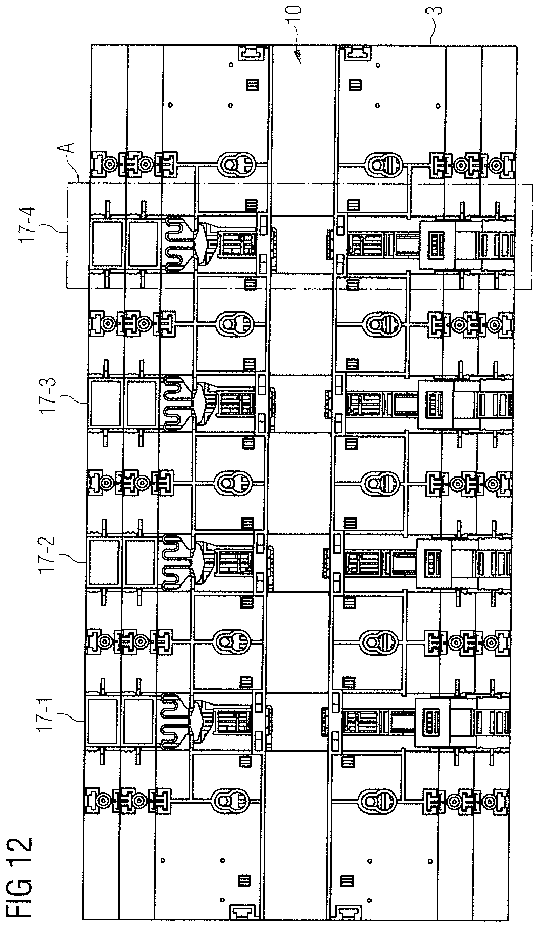

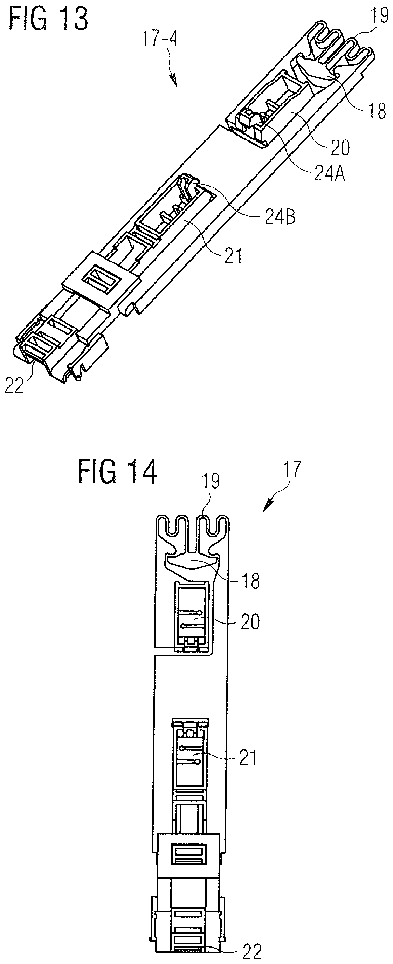

Fig. 12 zeigt eine Rückansicht auf das Unterteil 3 eines berührungsgeschützten Grundplattenmoduls 1. Man erkennt vier nebeneinanderliegende Rastbauelemente 17-i, die Befestigungsmittel 10 zum Aufrasten auf eine Tragschiene 23, insbesondere Hutschiene, bilden. Fig. 12 zeigt ein Basismodul mit vier Zusatzmodulen. Das Rastbauelement wird mit Erweiterungselementen verlängert. Fig. 13 zeigt perspektivisch eine Ansicht auf das in Fig. 12 dargestellte Rastbauelement 17-4, welches identisch ausgebildet ist zu den übrigen drei Rastbauelementen 17-1, 17-2, 17-3, mit Erweiterungselementen des Rastbauelements.

Die Fig. 14 zeigt eine Ansicht auf das in Fig. 13 dargestellte Rastbauelement 17-i von hinten. Das Rastbauelement 17, das zur Montage des berührungsgeschützten Grundplattenmoduls 1 an eine Tragschiene dient, besitzt einen Umlenkhebel 18, der an das Rastbauelement 17 über eine meanderförmige Verbindung 19 angespritzt ist und einen zentralen Lagerpunkt aufweist. Das Rastbauelement 17 besitzt ferner integrierte Rückstellfedern 20, 21. Alternativ ist auch eine Fremdfederung durch Druckfedern möglich. Weiterhin verfügt das Rastbauelement 17 über einen Bedienpunkt 22 für die Betätigung durch einen Nutzer bzw. Bediener. Das Rastbauelement 17 ist derart ausgelegt, dass durch den an dem Rastbauelement 17 angespritzten Umlenkhebel 18 eine von der einen Seite erfolgte Bedienbewegung so umgelenkt wird, dass beide Hutschienenverriegelungen sich von der betreffenden Hutschiene lösen. Der Umlenkhebel 18 wird an einer Rotationsachse gelagert. An dem Rastbauelement sind Verriegelungshaken 24A, 24B vorgesehen, die in verriegeltem Zustand die Hutschiene bzw. Tragschiene 23 hintergreifen, sodass das berührungsgeschützte Grundplattenmodul 1 nicht mehr von der Tragschiene bzw. Hutschiene 23 abgenommen werden kann. Wird das Rastbauelement 17 im Bereich 22 mit einem Schraubendreher betätigt bzw. gezogen, bewegt sich der angeformte Rasthaken 24B gleichförmig nach unten und gleichzeitig wird der Umlenkhebel 18 aus der in Fig. 14 dargestellten symmetrischen mittigen Lage rotatorisch um die Rotationsachse bewegt, wodurch der andere Rasthaken 24A sich in die entgegengesetzte Richtung bewegt, sodass das berührungsgeschützte Grundplattenmodul 1 von der Hutschiene bzw. Tragschiene 23 abgenommen werden kann. Wird das Rastelement weiter gezogen, so schnappt das Rastelement in eine Parkposition, sodass der Anwender bei der erneuten Montage die Rastelemente aktiv in die verriegelte Position zurückdrücken muss. Die Bedienung der durch die Rastbauelemente 17-i gebildeten Befestigungsmittel 10 kann durch einen Nutzer in einfacher Weise durch Betätigung der Bedienpunkte 22 am Rand des berührungsgeschützten Grundplattenmoduls 1 erfolgen. Ein Vorteil des doppelseitig wirkenden Rastelements ist, dass das Grundplattenmodul 1 frontal ohne ein Verkippen auf die Hutschiene aufgesetzt werden kann. Somit können auch sehr hohe Grundplattenmodule 1 ohne Probleme aufgesetzt werden.

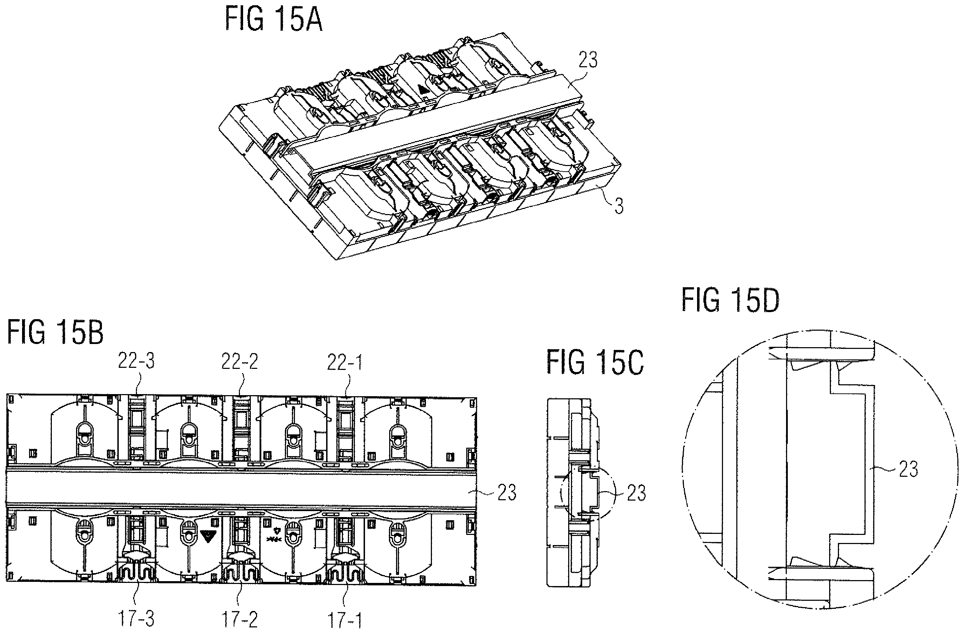

Figuren 15A, 15B, 15C, 15D zeigen ein auf eine Trägerschiene 23 aufgesetztes berührungsgeschütztes Grundplattenmodul 1 von der Rückseite und von der Seite. Bei dem in Fig. 15A, B, C, D dargestellten Ausführungsbeispiel verfügt das Grundplattenmodul 1 über drei Rastbauelemente 17-1, 17-2, 17-3. Bei dem in Fig. 15 dargestellten Ausführungsbeispiel sind die Bedienpunkte 22 der Rastbauelemente 17-i am oberen Rand des berührungsgeschützten Grundlagenmodul 1 vorgesehen. Je nach Umgebung und Kontext können somit die Berührungspunkte 22 der Rastbauelemente 17-i am oberen oder unteren Rand des berührungsgeschützten Grundlagenmoduls 1 zur einfachen Bedienung durch einen Nutzer vorgesehen werden. Die Rastbauelemente 17-i erlauben, das berührungsgeschützte Grundplattenmodul 1 frontal ohne Kippen auf die Tragschiene 23 aufzusetzen und wieder abzunehmen. Die Bedienung der Rastbauelemente 17-i ist mit oder ohne Verwendung eines Werkzeugs möglich. Die Tragschienen 23 können bei verschiedenen Ausführungsvarianten unterschiedliche Tragschienenhöhen besitzen. Die Bedienung der Rastbauelemente 17-i bietet den Vorteil, dass sie ohne Demontage Geräte bzw. Produkte von dem berührungsgeschützten Grundplattenmodul 1 bedienbar sind. Bei einer möglichen Ausführungsvariante besitzt die Rastfunktion der Rastbauelemente 17-i eine Parkstellung. Die Tragschiene 23 wird durch die Rastbauelemente 17-i beidseitig im eingerasteten Zustand umgriffen. Es erfolgt vorzugsweise eine Umlenkung der Bewegungsrichtung der Rastnasen durch einen Kippmechanismus des Rastbauelements 17. Bei einer möglichen Ausführungsform wird die Bedienfunktion beim Anstecken des berührungsgeschützten Grundplattenmoduls 1 bzw. Crossbars an das jeweilige Zusatzelement weitergegeben. Die Anzahl der notwendigen Rastbauelemente 17 hängt von der Größe bzw. Länge des berührungsgeschützten Grundlagenmoduls 1 sowie der Größe bzw. dem Gewicht der daran montierten bzw. montierbaren Geräte 11 ab. Je mehr Geräte 11 an das Grundplattenmodul 1 zu montieren sind und je höher deren voraussichtliches Gewicht ist, desto größer ist die Anzahl der an der Rückseite des berührungsgeschützten Grundlagenmoduls 1 angebrachten Rastbauelemente 17-i.

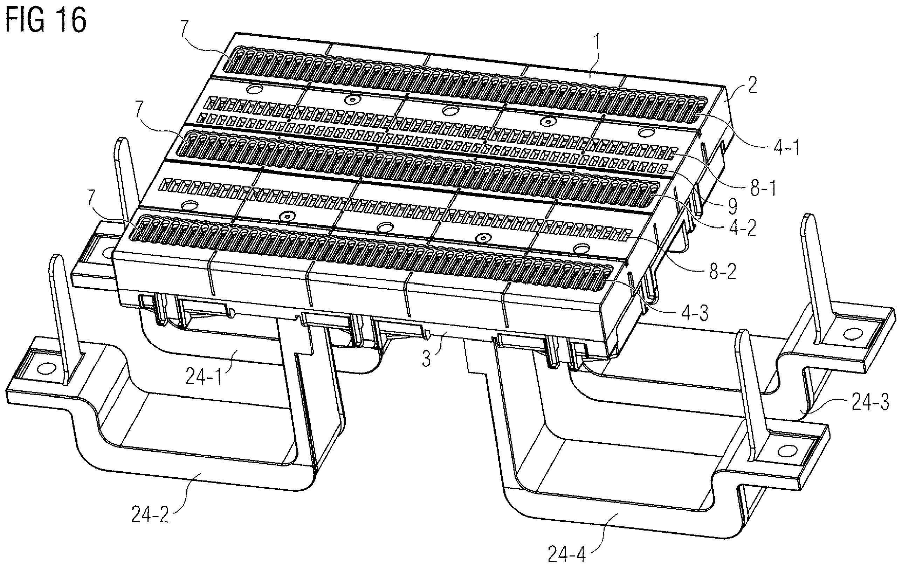

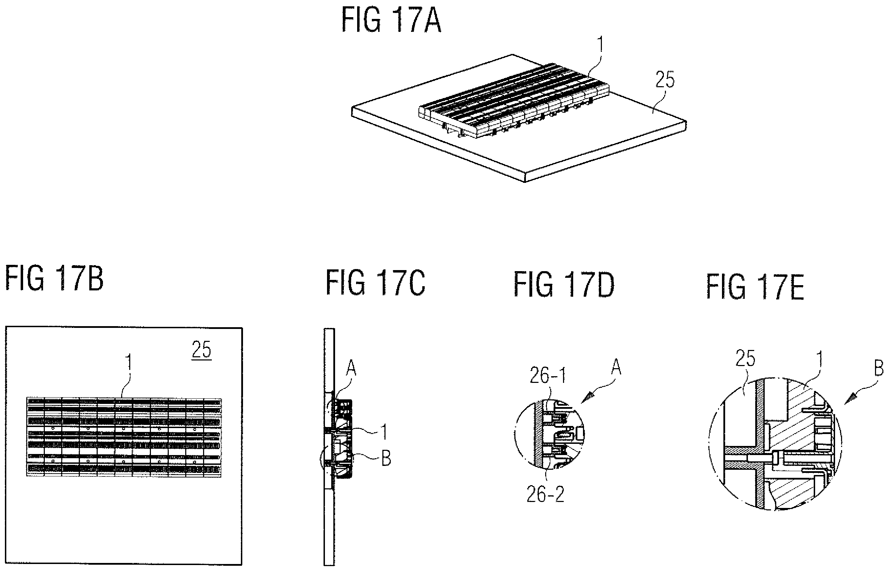

Fig. 16 zeigt ein weiteres Ausführungsbeispiel des berührungsgeschützten Grundplattenmoduls 1, wie es bei dem erfindungsgemäßen Stromsammelschienensystem eingesetzt werden kann. Fig. 16 zeigt die Befestigung des Grundplattenmoduls 1 auf einem Trägersystem der Fa. Lütze. Figuren 17A, 17B, 17C, 17D zeigen eine weitere Ausführungsform des berührungsgeschützten Grundlagenmoduls 1, wie es bei dem erfindungsgemäßen Stromsammelschienensystem einsetzbar ist. Bei der in Figuren 17A bis 17D dargestellten Ausführungsform ist das berührungsgeschützte Grundlagenmodul 1 an eine Montageplatte 25 montiert. Fig. 17A zeigt perspektivisch ein berührungsgeschütztes Grundplattenmodul 1, welches auf einer Montageplatte 25 befestigt ist. Fig. 17B zeigt eine Vorderansicht auf das montierte berührungsgeschützte Grundplattenmodul 1, welches sich auf der Montageplatte 25 befindet. Fig. 17C zeigt eine Schnittansicht durch das montierte berührungsgeschützte Grundplattenmodul 1. Figuren 17D, 17E zeigen Detailansichten A, B aus der Schnittansicht in Fig. 17C. Wie man aus Fig. 17D erkennen kann, können bei einer möglichen Ausführungsform mehrere zusätzliche Stützsäulenelemente 26-1, 26-2 das berührungsgeschützte Grundplattenmodul 1 zusätzlich auf der Montageplatte 25 abstützen. Fig. 17E zeigt, wie das berührungsgeschützte Grundplattenmodul 1 mit der Montageplatte 25 verschraubt werden kann. Die Schrauben werden über schlüssellochartig geformte Aufnahmen in der Grundplatte aufgenommen. Bei der Montage werden die Schrauben in die Grundplatte voreingeschraubt. Anschließend wird das Grundplattenmodul 1 über die Schlüssellochgeometrien in die Schrauben eingehängt und zum Schluss von der Vorderseite des Grundplattenmoduls 1 verschraubt.

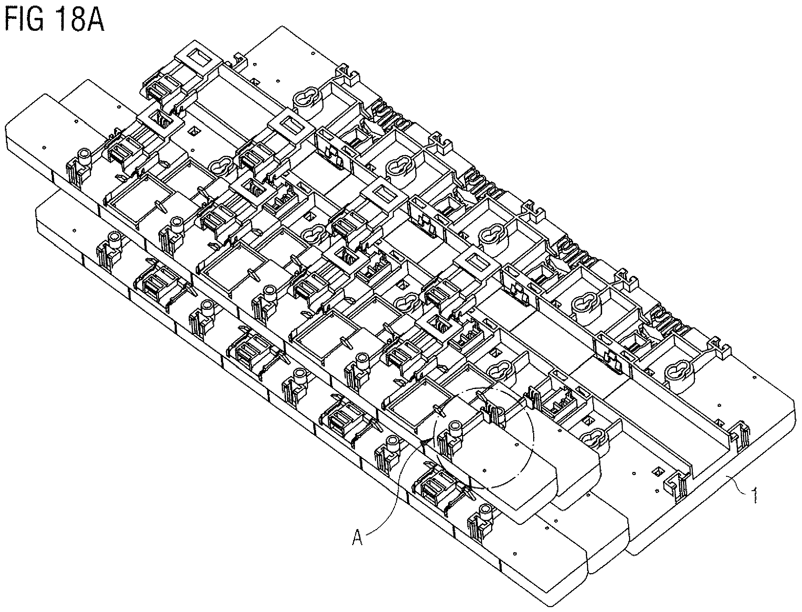

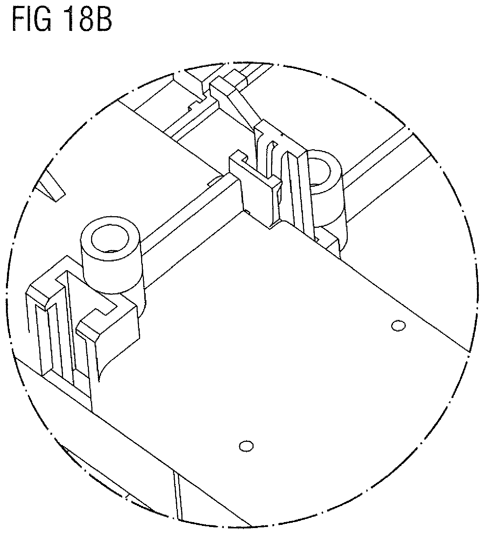

Fig. 18A, 18B zeigen eine weitere Montagemöglichkeit von einem berührungsgeschützten Grundplattenmodul 1, wie es bei dem erfindungsgemäßen Stromsammelschienensystem eingesetzt werden kann. Figuren 18A, 18B zeigen eine mechanische Verbindung für die Montage weiterer berührungsgeschützter Zusatzmodule zu dem berührungsgeschützten Grundplattenmodul 1. Fig. 18B zeigt eine Detailansicht der vorgenommenen mechanischen Verbindung. Die mechanische Verbindung wird ferner durch die Figuren 19A, 19B, 19C verdeutlicht. Wie man in Fig. 19C erkennen kann, wird ein berührungsgeschütztes Grundplattenmodul 1 durch weitere Zusatzmodule 26, 27 an einem Rand erweitert. Wie in Fig. 19A verdeutlicht, werden bei der dargestellten Ausführungsvariante Rastschieberverlängerungen 28, 29 in die Zusatzmodule 26, 27 eingelegt und die beiden Zusatzmodule 26, 27 mithilfe der Rastschieberverlängerungselemente 28, 29 miteinander verrastet, wie in Fig. 19B erkennbar. Anschließend werden die miteinander verbundenen Zusatzmodule 26, 27 mit dem Haupt-Grundplattenmodul 1 mechanisch verbunden, wie in Fig. 19C dargestellt. Dies geschieht mithilfe mechanischer Verbindungen zur Verbindung von berührungsgeschützten Grundplattenmodulen 1 bzw. Zusatzmodulen untereinander. Die Zusatzmodule 26, 27 können auch angebaut werden, wenn das Grundplattenmodul 1 bereits auf einer Montageplatte 25 in einem Schaltschrank eingebaut ist.

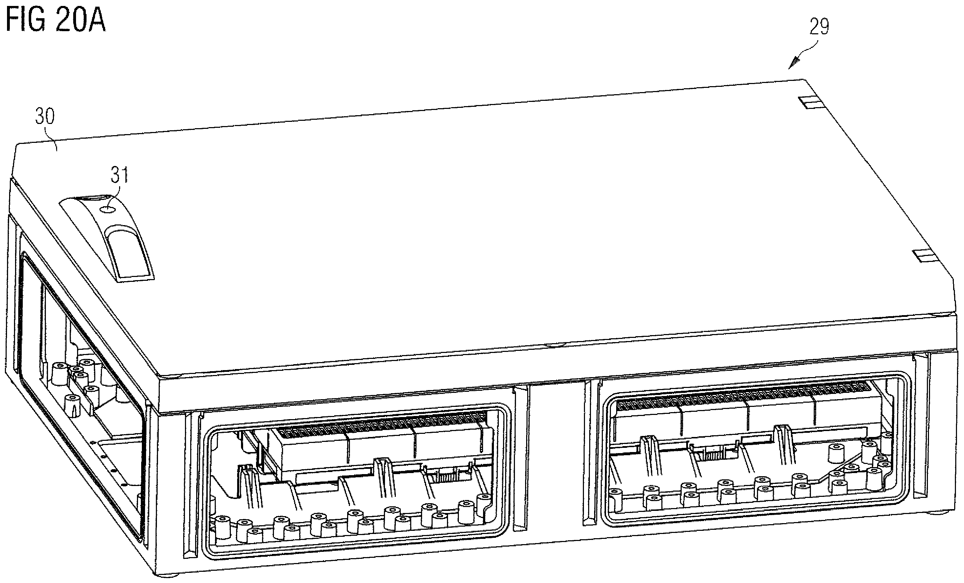

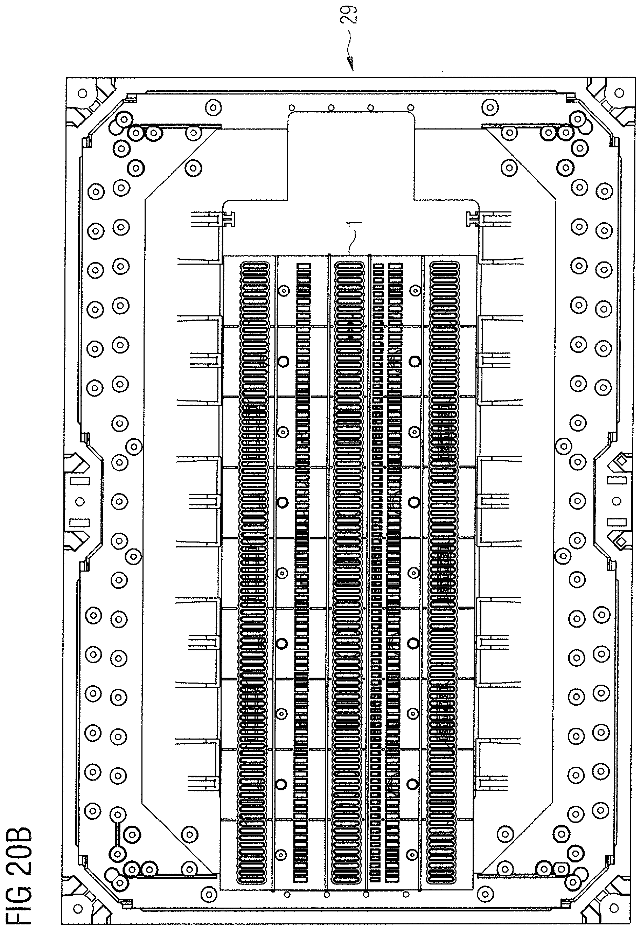

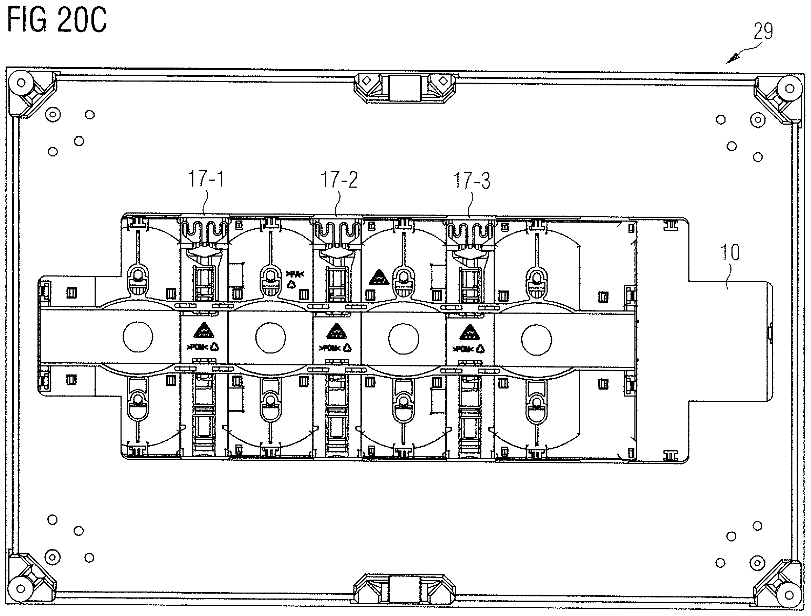

Figuren 20A, 20B, 20C zeigen eine weitere Ausführungsvariante des erfindungsgemäßen Stromsammelschienensystems. Bei der in Fig. 20A, 20B, 20C dargestellten Ausführungsvariante ist das berührungsgeschützte Grundplattenmodul 1 direkt in ein Schaltschrankgehäuse 29 integriert. Das Schaltschrankgehäuse 29 dient zur Aufnahme mehrerer Geräte bzw. Schaltgeräte 11, die auf das integrierte Grundplattenmodul 1 aufgesetzt und eingesteckt sind und ggf. mittels Rastbauelementen verriegelt sind. Das Schaltschrankgehäuse 29 kann bei einer möglichen Ausführungsform über einen abnehmbaren oder verschwenkbaren Deckel 30 verfügen, wie in Fig. 20A dargestellt. Dieser Schutzdeckel 30 besitzt bei einer möglichen Ausführungsform einen Handgriff 31 zum Öffnen des Schaltschrankes 29.
Fig. 20B zeigt eine Ansicht auf den Schaltschrank 29 nach Abnahme bzw. Öffnen des Deckels 30. Fig. 20B zeigt eine Ansicht von oben auf das in dem Schaltschrankgehäuse 29 integrierte Grundplattenmodul 1.

Fig. 20C zeigt eine Ansicht von hinten auf den in Fig. 20A dargestellten Schaltschrank 29. An der Rückseite des Schaltschrankgehäuses 29 befinden sich bei dem dargestellten Ausführungsbeispiel Befestigungsmittel 10 zur Befestigung des Schaltschrankes direkt an eine Tragschiene 23, insbesondere eine Hutschiene. Die mechanischen Befestigungsmittel verfügen in dem dargestellten Ausführungsbeispiel über drei Rastbauelemente 17-i, wie sie bereits im Zusammenhang mit Fig. 14 detailliert beschrieben worden sind.

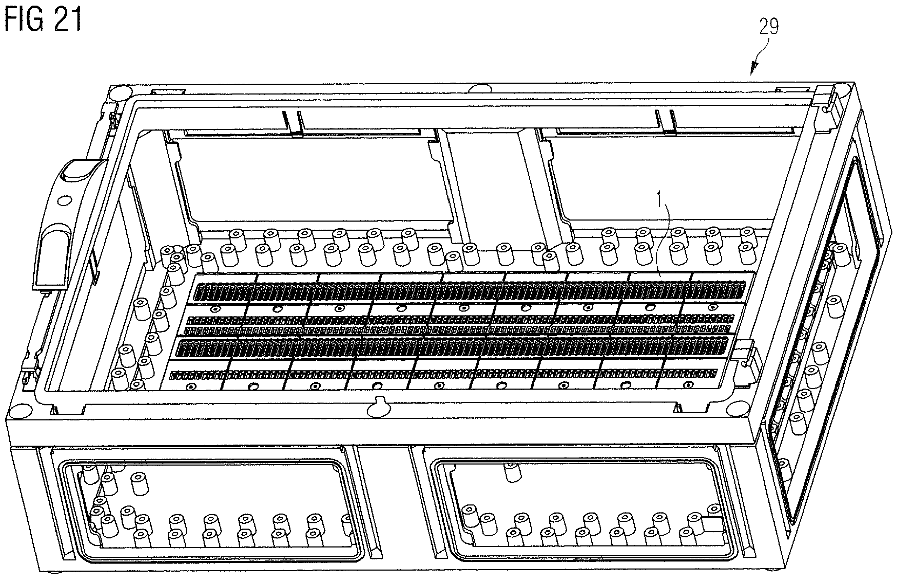

Fig. 21 zeigt perspektivisch eine Ansicht auf eine weitere Ausführungsvariante für einen Schaltschrank bzw. ein Schaltschrankgehäuse 29 mit einem darin integrierten berührungsgeschützten Grundplattenmodul 1. Das berührungsgeschützte Grundplattenmodul 1 kann auf einer Montageplatte 25, einer DIN-Tragschiene oder ein sonstiges Befestigungssystem angebracht werden. Das berührungsgeschützte Grundplattenmodul 1 ist vorzugsweise in verschiedenen Längen von 135 mm bis 495 mm verfügbar. Bei einer weiteren möglichen Ausführungsvariante ist eine Kombination mit herkömmlichen Stromsammelschienen möglich. Durch zusätzliche Schlitzabdeckungen kann der Berührungsschutz weiter erhöht werden gemäß IP40. Die Einspeisung von Strom bzw. Spannung kann frontal oder rückseitig erfolgen.

Das Grundplattenmodul 1 ist bei einer möglichen Ausführungsform an das Schaltschrankgehäuse angeformt bzw. angespritzt. Alternativ wird das Grundplattenmodul 1 in das Schaltschrankgehäuse eingeklippst bzw. in das Schaltschrankgehäuse eingerastet.

Die Zusatzmodule 26, 27 können, wie in den Figuren 5, 6 gezeigt, über Durchführöffnungen 7 verfügen, die auf der Frontseite bzw. Vorderseite des erweiterten Grundplattenmoduls 1 liegen. Die Zusatzmodule 26, 27 können bei einer möglichen Ausführungsform auch derart ausgebildet sein, dass sie Durchführöffnungen 7 besitzen, die auf der Rückseite des erweiterten Grundplattenmoduls 1 liegen. Weiterhin können die Zusatzmodule 26, 27 über Durchführöffnungen 7 an den Stirnseiten verfügen. In die Durchführöffnungen 7 der Zusatzmodule 26, 27 können Kontaktstecker eingeführt werden, die Stromsammelschienenmodule 6 kontaktieren, die in den Zusatzmodulen bzw. Crossbars 26, 27 enthalten sind. Diese Kontaktstecker dienen bei einer möglichen Ausführungsform der Strom- und/oder Spannungseinspeisung in das Stromsammelschienensystem.

Bei einer weiteren Ausführungsvariante werden Anschlusskontakte 13 von Geräten 11 oder Steckkontakte von Anschlusssteckern durch Durchführschlitze 7 des Grundplattenmoduls 1 oder durch Durchführschlitze 7 eines Zusatzmoduls 26, 27 hindurchgeführt und berühren mit ihrer Stirnseite die in dem Grundplattenmodul 1 oder dem Zusatzmodul 26, 27 enthaltene Stromsammelschiene zur elektrischen Kontaktierung der Stromsammelschiene. Bei dieser Ausführungsvariante können auch herkömmliche Stromsammelschienen ohne Kontaktöffnungen verwendet werden.

Bei einer weiteren Ausführungsvariante verfügt auch das Unterteil 3 des Grundplattenmoduls 1 über Durchführschlitze 7 zum Hindurchführen von Anschlusskontakten 13 oder Steckkontakten von Steckern. Das Grundplattenmodul 1 hat bei einer möglichen Ausführungsform beidseitig, d.h. an der Frontseite und an der Rückseite, Reihen 4-i von Durchführschlitzen 7 zum Anbringen von Geräten 11 und Versorgungssteckern.

Bei einer weiteren möglichen Ausführungsvariante wird ein Grundplattenmodul 1, welches symmetrisch ausgebildet ist und beidseitig Durchführschlitze 7 besitzt, ähnlich wie eine elektronische Schaltplatine mit seiner Stirnseite im Schaltschrank befestigt und von beiden Seiten mit Geräten 11 oder Versorgungssteckern bestückt. Hierdurch kann die Anzahl von Geräten 11 innerhalb eines Schaltschrankgehäuses mit vorgegebenem Volumen nochmals erhöht werden.

## Patentansprüche

1. Stromsammelschienensystem zum Anschluss von Geräten (11) mit mindestens einem berührungsgeschützten Grundplattenmodul (1) zur Aufnahme von länglich ausgebildeten und elektrisch leitfähigen Stromsammelschienenmodulen (6), **dadurch gekennzeichnet dass** die Stromsammelschienenmodule (6) jeweils eine Vielzahl gleichmäßig beabstandeter Kontaktöffnungen (5) eines Kontaktöffnungsrasters aufweisen,
wobei elektrische Anschlusskontakte (13) eines anzuschließenden Gerätes (11) in die Kontaktöffnungen (5) des Kontaktöffnungsrasters der elektrisch leitfähigen Stromsammelschienenmodule (6) zur Herstellung einer elektrischen und mechanischen Verbindung einsteckbar sind, wobei das berührungsgeschützte Grundplattenmodul (1) mindestens eine mit dem Grundplattenmodul (1) fest verbundene berührungsgeschützte Abdeckplatte (2) mit Durchführöffnungen (7) für Anschlusskontakte (13) aufweist, wobei die Durchführöffnungen (7) direkt über den Kontaktöffnungen (5) der in dem Grundplattenmodul (1) enthaltenen bzw. integrierten Stromsammelschienenmodule liegen.

2. Stromsammelschienensystem nach Anspruch 1,
wobei die in dem berührungsgeschützten Grundplattenmodul (1) enthaltenen Stromsammelschienenmodule (6) ein U-förmiges Querprofil mit einer Seitenwange oder zwei gegenüberliegenden Seitenwangen (6A, 6B) aufweisen, die zur Leitung eines elektrischen Stromes mit einer vorgegebenen maximalen Stromamplitude ausgelegt sind,
wobei die gegenüberliegenden Seitenwangen über einen Verbindungssteg (6C) miteinander verbunden sind, welcher die Kontaktöffnungen (5) des Kontaktöffnungsrasters zum Einstecken gefederter elektrischer Anschlusskontakte (13) eines anzuschließenden Gerätes (11) aufweist,
wobei die Seitenwangen (6A, 6B) des Querprofils zur elektrischen Leitung einer Stromphase (L) mit einer vorgegebenen maximalen Stromamplitude ausgelegt sind.

3. Stromsammelschienensystem nach Anspruch 1 oder 2, wobei das berührungsgeschützte Grundplattenmodul (1) des Stromsammelsystems zur Aufnahme mehrerer darin angeordneter Stromsammelschienen ausgebildet ist, die jeweils aus mindestens einem Stromsammelschienenmodul (6) bestehen.

4. Stromsammelschienensystem nach einem der vorangehenden Ansprüche 2 oder 3,
wobei die elektrisch leitfähigen Stromsammelschienenmodule (6) mit mindestens der berührungsgeschützten Abdeckplatte (2) abgedeckt sind, die in mindestens einer Reihe (4) angeordnete Durchführöffnungen (7) zum Hindurchführen von Anschlusskontakten (13) aufweist,
wobei die Anschlusskontakte (13) zum Anschließen eines Gerätes (11) oder eines weiteren Moduls in die direkt unter den Durchführöffnungen (7) liegenden Kontaktöffnungen (5) des Kontaktöffnungsrasters der elektrisch leitfähigen Stromsammelschienenmodule (6) einsteckbar sind.

5. Stromsammelschienensystem nach einem der vorangehenden Ansprüche 1 bis 4,
wobei das berührungsgeschützte Grundplattenmodul (1) an seiner Rückseite eine U-förmige Kontur (10) zur Aufnahme einer Tragschiene (23) aufweist.

6. Stromsammelschienensystem nach einem der vorangehenden Ansprüche 1 bis 5,
wobei die Anschlusskontakte (13) eines an das Stromsammelschienensystem anzuschließenden Gerätes (11) V-förmig oder fingerförmig ausgebildet sind und jeweils durch Durchführschlitze (7) der berührungsgeschützten Abdeckplatte (2) hindurchführbar und in darunterliegende Kontaktöffnungen (5) eines in dem Grundplattenmodul (1) enthaltenen Stromsammelschienenmoduls (6) einsteckbar sind.

7. Stromsammelschienensystem nach einem der vorangehenden Ansprüche 1 bis 6,
wobei die berührungsgeschützte Abdeckplatte (2) des Grundplattenmoduls (1) Kodierungsöffnungen für Verpolschutzrippen zum korrekten Anschließen von Geräten (11) an ein Stromsammelschienenmodul (6) des Stromsammelschienensystems aufweist.

8. Stromsammelschienensystem nach einem der vorangehenden Ansprüche 1 bis 7,
wobei das berührungsgeschützte Grundplattenmodul (1) neben Stromsammelschienenmodulen (6) elektrische Datenleitungen zur Kommunikation zwischen den an den Stromsammelschienen angeschlossenen Geräten (11) enthält und/oder, wobei die an das Stromsammelschienensystem angeschlossenen Geräte (11) mittels Powerlinekommunikation direkt über die in dem berührungsgeschützten Grundplattenmodul (1) enthaltenen Stromsammelschienen miteinander kommunizieren und/oder
wobei die an das Stromsammelschienensystem angeschlossenen Geräte (11) über eine drahtlose Funkschnittstelle miteinander kommunizieren.

9. Stromsammelschienensystem nach einem der vorangehenden Ansprüche 1 bis 8,
wobei in dem berührungsgeschützten Grundplattenmodul (1) Messmodule zur Strom- und Spannungsmessung an den in dem Grundplattenmodul (1) enthaltenen Stromsammelschienenmodulen (6) vorgesehen sind.

10. Stromsammelschienensystem nach einem der vorangehenden Ansprüche 1 bis 9,
wobei das berührungsgeschützte Grundplattenmodul (1) neben Stromsammelschienenmodulen (6) elektrische Versorgungsleitungen zur Übertragung von Hilfsversorgungsspannungen für in dem berührungsgeschützten Grundplattenmodul (1) vorgesehene Messmodule und/oder für angeschlossene Geräte (11) enthält.

11. Stromsammelschienensystem nach einem der vorangehenden Ansprüche 1 bis 10,
wobei das berührungsgeschützte Grundplattenmodul (1) mechanische Verbindungselemente zur Verbindung mit weiteren berührungsgeschützten Grundplattenmodulen (1) aufweist.

12. Stromsammelschienensystem nach einem der vorangehenden Ansprüche 1 bis 11,
wobei das berührungsgeschützte Grundplattenmodul (1) schockdämpfende und/oder vibrationsdämpfende Verbindungselemente zur mechanischen Abstützung von angeschlossenen Geräten (11) aufweist.

13. Stromsammelschienensystem nach einem der vorangehenden Ansprüche 1 bis 12,
wobei an dem berührungsgeschützten Grundplattenmodul (1) Einspeisebauelemente zur Stromeinspeisung in das Stromsammelschienensystem angebracht sind.

14. Stromsammelschienensystem nach einem der vorangehenden Ansprüche 1 bis 13,
wobei das berührungsgeschützte Grundplattenmodul (1) einen IP20-oder IP30-Berührungsschutz bietet, wobei ein IP40-Berührungsschutz mittels Zusatzabdeckungen erreichbar ist.

15. Stromsammelschienensystem nach einem der vorangehenden Ansprüche,
wobei ein Strom-Einspeisemodul des Stromsammelschienensystems zum Einspeisen verschiedener elektrischer Stromphasen in die in dem Grundplattenmodul (1) parallel angeordneten, jeweils aus einem Stromsammelschienenmodul (6) zusammengesetzten Stromsammelschienen vorgesehen ist, wobei das Strom-Einspeisemodul für jede in dem Grundplattenmodul (1) parallel angeordnete Stromsammelschiene einen berührungsgeschützten Anschlusszapfen mit elektrischen Anschlusskontakten (13) zum Einstecken in Kontaktöffnungen (5) eines Stromsammelschienenmoduls (6) aufweist.

16. Stromsammelschienensystem nach einem der vorangehenden Ansprüche,
wobei ein berührungsgeschütztes Brückenmodul des Stromsammelschienensystems beiderseitig jeweils mehrere Anschlusskontakte (13) zum Einstecken in Kontaktöffnungen (5) aufweist, die sich an Enden zweier jeweils durch ein Deckelmodul abgedeckter länglich ausgebildeter und elektrisch leitfähiger benachbarter Stromsammelschienenmodule (6) einer Stromsammelschiene des Stromsammelschienensystems befinden, wobei das berührungsgeschützte Brückenmodul beiderseits mittig angeordnete Durchführöffnungen (7) zum Hindurchführen von Anschlusskontakten (13) aufweist, die zum Anschließen eines Gerätes (11) an das Stromsammelschienensystem in Kontaktöffnungen (5) des Kontaktöffnungsrasters der beiden durch das Brückenmodul zusammengesetzten elektrisch leitfähigen Stromsammelschienenmodule (6) einsteckbar sind.

17. Stromsammelschienensystem nach einem der vorangehenden Ansprüche,
wobei ein berührungsgeschütztes Endkappenmodul des Stromsammelschienensystems mehrere Anschlusskontakte (13) zum Einstecken in Kontaktöffnungen (5) des Kontaktöffnungsrasters aufweist, die sich an einem Ende eines durch ein berührungsgeschütztes Deckelmodul abgedeckten länglich ausgebildeten und elektrisch leitfähigen Stromsammelschienenmoduls (6) einer Stromsammelschiene des Stromsammelschienensystems befinden, wobei das berührungsgeschützte Endkappenmodul mittig angeordnete Durchführöffnungen (7) zum Hindurchführen von Anschlusskontakten (13) aufweist, die zum Anschließen eines Gerätes (11) an das Stromsammelschienensystem in Kontaktöffnungen (5) des Kontaktöffnungsrasters einsteckbar sind, die unter dem berührungsgeschützten Endkappenmodul liegen.

18. Stromsammelschienensystem nach einem der vorangehenden Ansprüche,
wobei ein berührungsgeschütztes länglich ausgebildetes Deckelmodul des Stromsammelschienensystems an seinen beiden Enden jeweils eine Aussparung aufweist, die dazu vorgesehen ist, ein Endkappenmodul, eine Seite eines Brückenmoduls oder einen Anschlusszapfen eines Strom-Einspeisemoduls des Stromsammelschienensystems in Kontaktöffnungen (5) des Kontaktöffnungsrasters elektrisch leitfähiger Stromsammelschienen des Stromsammelschienensystems formbündig zur Bildung einer berührungsgeschützten Abdeckplatte (2) des Stromsammelschienensystems einzustecken.

19. Stromsammelschienensystem nach einem der vorangehenden Ansprüche,
wobei ein an das Stromsammelschienensystem anzuschließendes Gerät (11) auf die aus den Stromsammelschienenmodulen (6) zusammengesetzten Stromsammelschienen des Stromsammelschienensystems zur Herstellung einer mechanischen Verbindung aufrastbar ist,
wobei das an das Stromsammelschienensystem anzuschließende Gerät (11) zusätzlich Rastmittel (16) aufweist, die auf die Abdeckplatte (2) und/oder in parallel zu den Stromsammelschienenmodulen (6) verlaufende Raststege des berührungsgeschützten Grundplattenmoduls (1) des Stromsammelschienensystems aufrastbar sind,
wobei die Rastmittel (16) des an das Stromsammelschienensystem anzuschließenden Gerätes (11) Rastnasen aufweisen, die zum Ent- und Verriegeln der mechanischen Verbindung an einem manuell betätigbaren Rastmittel des anzuschließenden Gerätes (11) angebracht sind, das zu den Stromsammelschienenmodulen (6) des Stromsammelschienensystems innerhalb eines Gehäuses des anzuschließenden Gerätes (11) lateral verschiebbar ist.

20. Stromsammelschienensystem nach einem der vorangehenden Ansprüche,
wobei die Anschlusskontakte (13) des Gerätes (11) zur Herstellung der elektrischen und mechanischen Verbindung selbstfedernd ausgebildet oder fremdgefedert sind.

21. Stromsammelschienensystem nach einem der vorangehenden Ansprüche 1 bis 20,
wobei ein an das Stromsammelschienensystem anschließbares Gerät (11) ein elektrisches, elektronisches oder elektromechanisches Gerät ist, das zur Herstellung einer elektrischen Verbindung mit dem Stromsammelschienensystem elektrische Anschlusskontakte (13) und/oder Kontaktschutzrippen und/oder Rastmittel (14, 16) zur Herstellung einer mechanischen Verbindung mit dem Stromsammelschienensystem und/oder Verpolschutzrippen (32) zum korrekten Anschließen an das Stromsammelschienensystem aufweist.

22. Stromsammelschienensystem nach einem der vorangehenden Ansprüche 1 bis 21,
wobei das berührungsgeschützte Grundplattenmodul (1) des Stromsammelschienensystems erste Stromsammelschienenmodule (6) für verschiedene Stromphasen (L) des Stromsammelschienensystems und zweite Stromsammelschienenmodule (6) für Schutzleiter (P, N) des Stromsammelschienensystems enthält.

23. Stromsammelschienensystem nach einem der vorangehenden Ansprüche 1 bis 22,
wobei das berührungsgeschützte Grundplattenmodul (1) in ein Schaltschrankgehäuse (29) zur Aufnahme mehrerer Geräte (11) integriert ist, die in die Kontaktöffnungen (5) des Kontaktöffnungsrasters der in dem Grundplattenmodul (1) enthaltenen Stromsammelschienenmodule (6) eingesteckt sind.

24. Stromsammelschienensystem nach einem der vorangehenden Ansprüche 1 bis 23,
wobei das berührungsgeschützte Grundplattenmodul (1) auf seiner Rückseite mindestens ein beidseitig wirkendes Rastbauelement (17) aufweist, das eine Tragschiene (23) von oben und unten zur frontalen Montage ohne Verkippen hintergreift.

25. Stromsammelschienensystem nach einem der vorangehenden Ansprüche 1 bis 24,
wobei Zusatzmodule und/oder vibrationsdämpfende Verbindungselemente an das Grundplattenmodul (1), insbesondere auch in einem eingebauten Zustand des Grundplattenmoduls (1), anbringbar sind.

26. Stromsammelschienensystem nach einem der vorangehenden Ansprüche 1 bis 25,
wobei die Strom- oder Spannungseinspeisung in die Stromsammelschienenmodule (6) von der Vorderseite oder von der Rückseite des Grundplattenmoduls (1) erfolgt.

27. Stromsammelschienenmodul (6) für ein Stromsammelschienensystem nach einem der vorangehenden Ansprüche 1 bis 26,
wobei das Stromsammelschienenmodul (6) eine Vielzahl gleichmäßig beabstandeter Kontaktöffnungen (5) eines Kontaktöffnungsrasters aufweist und ein flaches, geschlossenes oder ein U-förmiges Querprofil mit zwei gegenüberliegenden Seitenwangen (6A, 6B) hat, wobei die gegenüberliegenden Seitenwangen (6A, 6B) über einen Verbindungssteg (6C) miteinander verbunden sind, welcher die Kontaktöffnungen (5) des Kontaktöffnungsrasters zum Einstecken gefederter elektrischer Anschlusskontakte (13) eines anzuschließenden Gerätes (11) oder eines Einspeisemoduls, eines Brückenmoduls, eines Endkappenmoduls oder eines sonstigen Moduls des Stromsammelschienensystems aufweist.

## Claims

1. Busbar rail system for connecting appliances (11) comprising at least one contact-protected base plate module (1) for receiving elongately formed, electrically conductive busbar modules (6),
**characterised in that**
the busbar modules (6) each have a plurality of uniformly spaced contact openings (5) of a contact opening grid, electrical terminal contacts (13) of an appliance (11) to be connected being insertable into the contact openings (5) of the contact opening grid of the electrically conductive busbar modules (6) to establish an electrical and mechanical connection, the contact-protected base plate module (1) having at least one contact-protected cover plate (2) comprising pass-through openings (7) for terminal contacts (13), which is rigidly connected to the base plate module (1), the pass-through openings (7) being positioned directly over the contact openings (5) of the busbar modules which are contained in or integrated into the base plate module (1) .

2. Busbar rail system according to claim 1,
wherein the busbar modules (6) contained in the contact-protected base plate module (1) have a U-shaped transverse profile comprising a side wall or two opposite side walls (6A, 6B), which are configured to conduct an electrical current having a predetermined maximum current amplitude, wherein the opposite side walls are interconnected via a connecting web (6C), which has the contact openings (5) of the contact opening grid for inserting spring-loaded electrical terminal contacts (13) of an appliance (11) to be connected,
wherein the side walls (6A, 6B) of the transverse profile are configured for electrical conduction of a current phase (L) having a predetermined maximum current amplitude.

3. Busbar system according to either claim 1 or claim 2,
wherein the contact-protected base plate module (1) of the busbar system is configured for receiving a plurality of busbars arranged therein, which each consist of at least one busbar module (6).

4. Busbar system according to either of preceding claims 2 and 3,
wherein the electrically conductive busbar modules (6) are covered with at least the contact-protected cover plate (2), which has pass-through openings (7) arranged in at least one row (4) for passing terminal contacts (13) through, wherein, for connecting an appliance (11) or a further module, the terminal contacts (13) are insertable into the contact openings (5), positioned directly below the pass-through openings (7), of the contact opening grid of the electrically conductive busbar modules (6).

5. Busbar rail system according to any of preceding claims 1 to 4,
wherein the contact-protected base plate module (1) has on the rear face thereof a U-shaped outline (10) for receiving a carrier rail (23).

6. Busbar system according to any of preceding claims 1 to 5,
wherein the terminal contacts (13) of an appliance (11) to be connected to the busbar system are formed V-shaped or finger-shaped and can each be passed through pass-through slots (7) of the contact-protected cover plate (2) and inserted into contact openings (5), positioned below, of a busbar module (6) contained in the base plate module (1).

7. Busbar system according to any of preceding claims 1 to 6,
wherein the contact-protected cover plate (2) of the base plate module (1) has coding openings for reverse polarity protection ribs for correct connection of appliances (11) to a busbar module (6) of the busbar system.

8. Busbar system according to any of preceding claims 1 to 7,
wherein the contact-protected base plate module (1) contains, in addition to busbar modules (6), electrical data lines for communication between the appliances (11) connected to the busbars, and/or
wherein the appliances (11) connected to the busbar system communicate with one another directly by powerline communication via the busbars contained in the contact-protected base plate module (1), and/or
wherein the appliances (11) connected to the busbar system communicate via a wireless interface.

9. Busbar system according to any of preceding claims 1 to 8,
wherein, in the contact-protected base plate module (1), measurement modules for current and voltage measurement are provided at the busbar modules (6) contained in the base plate module (1).

10. Busbar system according to any of preceding claims 1 to 9,
wherein the contact-protected base plate module (1) contains, in addition to busbar modules (6), electrical supply lines for conveying auxiliary supply voltages for measurement modules provided in the contact-protected base plate module (1) and/or for connected appliances (11).

11. Busbar system according to any of preceding claims 1 to 10,
wherein the contact-protected base plate module (1) has mechanical connecting elements for connecting to further contact-protected base plate modules (1).

12. Busbar system according to any of preceding claims 1 to 11,
wherein the contact-protected base plate module (1) has shock-absorbing and/or vibration-absorbing connecting elements for mechanical bracing of connected appliances (11) .

13. Busbar system according to any of preceding claims 1 to 12,
wherein feed-in components for feeding current into the busbar system are attached to the contact-protected base plate module (1).

14. Busbar system according to any of preceding claims 1 to 13,
wherein the contact-protected base plate module (1) provides IP20 or IP30 contact protection, IP40 contact protection being available by way of additional coverings.

15. Busbar system according to any of the preceding claims,
wherein a current feed-in module of the busbar system is provided for feeding different electrical current phases into the busbars arranged in parallel in the base plate module (1), which are each composed from a busbar module (6),
wherein the current feed-in module has, for each busbar arranged in parallel in the base plate module (1), a contact-protected terminal pin comprising electrical terminal contacts (13) for plugging into contact openings (5) of a busbar module (6).

16. Busbar system according to any of the preceding claims,
wherein a contact-free bridge module of the busbar system has on each of the two sides a plurality of terminal contacts (13) for inserting into contact openings (5), which are located on ends of two elongately formed, electrically conductive, adjacent busbar modules (6) of a busbar of the busbar system which are each covered by a cover module, the contact-protected bridge module having on both sides centrally arranged pass-through openings (7) for passing terminal contacts (13) through, which, for connecting an appliance (11) to the busbar system, are insertable into contact openings (5) of the contact opening grid of the two electrically conductive busbar modules (6) assembled by the bridge module.

17. Busbar system according to any of the preceding claims,
wherein a contact-protected end cap module of the busbar system has a plurality of terminal contacts (13) for inserting into contact openings (5) of the contact opening grid, which are located at an end of an elongately formed, electrically conductive busbar module (6), covered by a contact-protected cover module, of the busbar system, the contact-protected end cap module having centrally arranged pass-through openings (7) for passing terminal contacts (13) through, which, for connecting an appliance (11) to the busbar system, are insertable into contact openings (5) of the contact opening grid, which are positioned below the contact-protected end cap module.

18. Busbar system according to any of the preceding claims,
wherein a contact-protected, elongately formed cover module of the busbar system has, on each of the two ends thereof, a clearance which is provided for plugging an end cap module, one side of a bridge module or a terminal pin of a current feed-in module of the busbar system into contact openings (5) of the contact opening grid of electrically conductive busbars of the busbar system in a close-fitting manner to form a contact-protected cover plate (2) of the busbar system.

19. Busbar system according to any of the preceding claims,
wherein an appliance (11) to be connected to the busbar system can be latched onto the busbars of the busbar system, which are composed from the busbar modules (6), to establish a mechanical connection,
wherein the appliance (11) to be connected to the busbar system additionally has latching means (16), which can be latched onto the cover plate (2) and/or in parallel with latching webs of the contact-protected base plate module (1) of the busbar system which extend in parallel with the busbar modules (6),
wherein the latching means (16) of the appliance (11) to be connected to the busbar system have latching tabs, which, for locking and unlocking the mechanical connection, are attached to a manually actuable latching means of the appliance (11) to be connected, which can be displaced laterally with respect to the busbar modules (6) of the busbar system within a housing of the appliance (11) to be connected.

20. Busbar system according to any of the preceding claims,
wherein the terminal contacts (13) of the appliance (11) are formed internally or externally spring-loaded for establishing the electrical and mechanical connection.

21. Busbar system according to any of preceding claims 1 to 20,
wherein an appliance (11) connectable to the busbar system is an electrical, electronic or electromechanical appliance which, for establishing an electrical connection to the busbar system, has electrical terminal contacts (13) and/or contact protection ribs and/or latching means (14, 16) for establishing a mechanical connection to the busbar system and/or reverse polarity protection ribs (32) for correct connection to the busbar system.

22. Busbar system according to any of preceding claims 1 to 21,
wherein the contact-protected base plate module (1) of the busbar system contains first busbar modules (6) for different current phases (L) of the busbar system and second busbar modules (6) for protective conductors (P, N) of the busbar system.

23. Busbar system according to any of preceding claims 1 to 22,
wherein the contact-protected base plate module (1) is integrated into a control cabinet housing (29) for receiving a plurality of appliances (11), which are plugged into the contact openings (5) of the contact opening grid of the busbar modules (6) contained in the base plate module (1).

24. Busbar system according to any of preceding claims 1 to 23,
wherein the contact-protected base plate module (1) has on the rear face thereof at least one latching component (17), which operates on both sides and engages behind a carrier rail (23) from above and below for frontal mounting without tilting.

25. Busbar system according to any of preceding claims 1 to 24,
wherein additional modules and/or vibration-absorbing connecting elements are attachable to the base plate module (1), in particular even in an installed state of the base plate module (1).

26. Busbar system according to any of preceding claims 1 to 25,
wherein the current or voltage is fed into the busbar modules (6) from the front face or from the rear face of the base plate module (1).

27. Busbar module (6) for a busbar system according to any of preceding claims 1 to 26,
wherein the busbar module (6) has a plurality of uniformly spaced contact openings (5) of a contact opening grid and a planar, closed or U-shaped transverse profile comprising two opposite side walls (6A, 6B), the opposite side walls (6A, 6B) being interconnected via a connecting web (6C) which, for has the contact openings (5) of the contact opening grid for plugging in spring-loaded electrical terminal contacts (13) of an appliance (11) to be connected or of a feed-in module, a bridge module, an end cap module or another module of the busbar system.

## Revendications

1. Système de barres omnibus permettant le raccordement d'appareils (11), doté d'au moins un module de plaque de base (1) protégé contre les contacts afin de loger des modules de barres omnibus (6) électriquement conducteurs et réalisés oblongs, **caractérisé en ce que** les modules de barres omnibus (6) présentent respectivement une pluralité d'ouvertures de contact (5) également écartées d'une grille d'ouvertures de contact, dans lequel des contacts de raccordement électriques (13) d'un appareil à raccorder (11) sont enfichables dans les ouvertures de contact (5) de la grille d'ouvertures de contact des modules de barres omnibus (6) électriquement conducteurs afin d'établir une liaison électrique et mécanique, dans lequel le module de plaque de base (1) protégé contre les contacts présente au moins une plaque de couverture (2) protégée contre les contacts, dotée d'ouvertures de passage (7) pour des contacts de raccordement (13) et reliée de manière fixe au module de plaque de base (1), dans lequel les ouvertures de passage (7) sont situées directement au-dessus des ouvertures de contact (7) des modules de barres omnibus compris ou intégrés dans le module de plaque de base (1).

2. Système de barres omnibus selon la revendication 1,
dans lequel les modules de barres omnibus (6) compris ou intégrés dans le module de plaque de base (1) protégé contre les contacts présentent un profil transversal en forme de U doté d'un montant latéral ou de deux montants latéraux opposés (6A, 6B), lesquels sont adaptés pour conduire un courant électrique ayant une amplitude de courant maximale prédéfinie,
dans lequel les montants latéraux opposés sont reliés l'un à l'autre par le biais d'une traverse de liaison (6C), laquelle présente les ouvertures de contact (5) de la grille d'ouvertures de contact pour l'enfichage de contacts de raccordement électriques élastiques (13) d'un appareil à raccorder (11),
dans lequel les montants latéraux (6A, 6B) du profil transversal sont adaptés pour conduire électriquement une phase de courant (L) ayant une amplitude de courant maximale prédéfinie.

3. Système de barres omnibus selon la revendication 1 ou 2,
dans lequel le module de plaque de base (1) protégé contre les contacts du système omnibus est réalisé pour loger plusieurs barres omnibus agencées dans celui-ci, lesquelles sont constituées chacune d'au moins un module de barres omnibus (6).

4. Système de barres omnibus selon l'une des revendications précédentes 2 ou 3,
dans lequel les modules de barres omnibus (6) électriquement conducteurs sont recouverts avec au moins la plaque de couverture (2) protégée contre les contacts, laquelle présente des ouvertures de passage (7) agencées en au moins une rangée (4) pour le passage des contacts de raccordement (13),
dans lequel les contacts de raccordement (13) sont, pour le raccordement d'un appareil (11) ou d'un module supplémentaire, enfichables dans les ouvertures de contact (5), situées directement sous les ouvertures de passage (7), de la grille d'ouvertures de contact des modules de barres omnibus (6) électriquement conducteurs.

5. Système de barres omnibus selon l'une des revendications précédentes 1 à 4,
dans lequel le module de plaque de base (1) protégé contre les contacts présente sur sa face arrière un contour (10) en forme de U permettant de loger un rail porteur (23).

6. Système de barres omnibus selon l'une des revendications précédentes 1 à 5,
dans lequel les contacts de raccordement (13) d'un appareil (11) à raccorder au système de barres omnibus sont réalisés en forme de V ou en forme de doigt et sont respectivement passables à travers des fentes de passage (7) de la plaque de couverture (2) protégée contre les contacts et enfichables dans des ouvertures de contact (5) situées sous celle-ci d'un module de barres omnibus (6) compris dans le module de plaque de base (1).

7. Système de barres omnibus selon l'une des revendications précédentes 1 à 6,
dans lequel la plaque de couverture (2) protégée contre les contacts du module de plaque de base (1) présente des ouvertures codantes pour des nervures anti-inversion de polarité permettant le raccordement correct d'appareils (11) à un module de barres omnibus (6) du système de barres omnibus.

8. Système de barres omnibus selon l'une des revendications précédentes 1 à 7,
dans lequel le module de plaque de base (1) protégé contre les contacts comprend, outre des modules de barres omnibus (6), des lignes de données électriques permettant la communication entre les appareils (11) raccordés aux barres omnibus et/ou
dans lequel les appareils (11) raccordés aux barres omnibus communiquent l'un avec l'autre au moyen de la communication par courants porteurs directement par le biais des barres omnibus comprises dans le module de plaque de base (1) protégé contre les contacts et/ou
dans lequel les appareils (11) raccordés aux barres omnibus communiquent l'un avec l'autre au moyen d'une interface radio sans fil.

9. Système de barres omnibus selon l'une des revendications précédentes 1 à 8,
dans lequel des modules de mesures sont prévus dans le module de plaque de base (1) protégé contre les contacts pour mesurer le courant et la tension au niveau des modules de barres omnibus (6) compris dans le module de plaque de base (1).

10. Système de barres omnibus selon l'une des revendications précédentes 1 à 9,
dans lequel le module de plaque de base (1) protégé contre les contacts comprend, outre des modules de barres omnibus (6), des lignes d'alimentation électrique pour la transmission de tensions d'alimentation auxiliaire pour des modules de mesures prévus dans le module de plaque de base (1) protégé contre les contacts et/ou pour des appareils raccordés (11).

11. Système de barres omnibus selon l'une des revendications précédentes 1 à 10,
dans lequel le module de plaque de base (1) protégé contre les contacts présente des éléments de liaison mécanique pour la liaison avec d'autres modules de plaque de base (1) protégés contre les contacts.

12. Système de barres omnibus selon l'une des revendications précédentes 1 à 11,
dans lequel le module de plaque de base (1) protégé contre les contacts présente des éléments de liaison amortisseurs de chocs et/ou amortisseurs de vibrations permettant un support mécanique d'appareils (11) raccordés.

13. Système de barres omnibus selon l'une des revendications précédentes 1 à 12,
dans lequel des composants d'injection permettant d'injecter du courant dans le système de barres omnibus sont rapportés sur le module de plaque de base (1) protégé contre les contacts.

14. Système de barres omnibus selon l'une des revendications précédentes 1 à 13,
dans lequel le module de plaque de base (1) protégé contre les contacts offre une protection contre les contacts IP-20 ou IP-30, dans lequel une protection contre les contacts IP-40 peut être atteinte au moyen de recouvrement supplémentaires.

15. Système de barres omnibus selon l'une des revendications précédentes,
dans lequel est prévu un module d'injection de courant du système de barres omnibus permettant d'injecter différentes phases de courant électrique dans les barres omnibus agencées en parallèle dans le module de plaque de base (1) composées respectivement d'un module de barres omnibus (6), dans lequel le module d'injection de courant présente pour chaque barre omnibus agencée en parallèle dans le module de plaque de base (1) un tenon de raccordement protégé contre les contacts doté de contacts de raccordement électrique (13) permettant l'enfichage dans des ouvertures de contact (5) d'un module de barres omnibus (6).

16. Système de barres omnibus selon l'une des revendications précédentes,
dans lequel un module de pont protégé contre les contacts du système de barres omnibus présente respectivement des deux côtés plusieurs contacts de raccordement (13) permettant l'enfichage dans des ouvertures de contact (5), lesquelles se trouvent aux extrémités de deux modules de barres omnibus (6) adjacents, recouverts respectivement par un module de couvercle, réalisés oblongs et électriquement conducteurs d'une barre omnibus d'un système de barres omnibus, dans lequel le module de pont protégé contre les contacts présente des deux côtés des ouvertures de passage (7) agencées au centre pour le passage de contacts de raccordement (13), lesquelles sont enfichables dans des ouvertures de contact (5) de la grille d'ouvertures de contact des deux modules de barres omnibus (6) électriquement conducteurs assemblés par le module de pont afin de raccorder un appareil (11) au système de barres omnibus.

17. Système de barres omnibus selon l'une des revendications précédentes,
dans lequel un module de capuchon d'extrémité protégé contre les contacts du système de barres omnibus présente plusieurs contacts de raccordement (13) permettant l'enfichage dans des ouvertures de contact (5) de la grille d'ouvertures de contact, lesquelles se trouvent à une extrémité d'un module de barres omnibus (6), recouvert par un module de couvercle protégé contre les contacts, réalisé oblong et électriquement conducteur d'une barre omnibus d'un système de barres omnibus, dans lequel le module de capuchon d'extrémité protégé contre les contacts présente des deux côtés des ouvertures de passage (7) agencées au centre pour le passage de contacts de raccordement (13), lesquelles sont enfichables dans des ouvertures de contact (5) de la grille d'ouvertures de contact se trouvant sous le module de capuchon d'extrémité protégé contre les contacts afin de raccorder un appareil (11) au système de barres omnibus.

18. Système de barres omnibus selon l'une des revendications précédentes,
dans lequel un module de couvercle protégé contre les contacts réalisé oblong du système de barres omnibus présente respectivement un évidement à ses deux extrémités, lequel est prévu pour enficher en affleurement de forme un module de capuchon d'extrémité, un côté d'un module de pont ou un tenon de raccordement d'un module d'injection de courant du système de barres omnibus dans des ouvertures de contact (5) de la grille d'ouvertures de contact de barres omnibus électriquement conductrices du système de barres omnibus afin de former une plaque de couverture (2) protégée contre les contacts du système de barres omnibus.

19. Système de barres omnibus selon l'une des revendications précédentes,
dans lequel un appareil (11) à raccorder au système de barres omnibus est encliquetable sur la barre omnibus, composée des modules de barre omnibus (6), du système de barres omnibus afin d'établir une liaison mécanique,
dans lequel un appareil (11) à raccorder au système de barres omnibus présente additionnellement des moyens d'encliquetage (16), lesquels peuvent s'encliqueter sur la plaque de couverture (2) et/ou dans des talons d'encliquetage, s'étendant parallèlement aux modules de barres omnibus (6), du module de plaque de base (1) protégé contre les contacts du système de barres omnibus,
dans lequel les moyens d'encliquetage (16) de l'appareil (11) à raccorder au système de barres omnibus présentent des ergots d'encliquetage, lesquels sont rapportés sur un moyen d'encliquetage actionnable manuellement de l'appareil (11) à raccorder pour le verrouillage et le déverrouillage de la liaison mécanique, lequel moyen peut coulisser latéralement par rapport aux modules de barres omnibus (6) à l'intérieur d'un boîtier de l'appareil (11) à raccorder.

20. Système de barres omnibus selon l'une des revendications précédentes,
dans lequel les contacts de raccordement (13) de l'appareil (11) sont réalisés comme doté d'élasticité propre ou doté d'un élément élastique tiers pour créer la liaison électrique et mécanique.

21. Système de barres omnibus selon l'une des revendications précédentes 1 à 20,
dans lequel un appareil (11) à raccorder au système de barres omnibus est un appareil électrique, électronique ou électromécanique, présentant des contacts de raccordement électrique (13) et/ou des nervures de protection des contacts et/ou des moyens d'encliquetage (14, 16) pour établir une liaison électrique avec le système de barres omnibus et/ou des nervures anti-inversion de polarité (32) pour le raccordement correct au système de barres omnibus.

22. Système de barres omnibus selon l'une des revendications précédentes 1 à 21,
dans lequel le module de plaque de base (1) protégé contre les contacts du système de barres omnibus comprend des premiers modules de barres omnibus (6) pour différentes phases de courant (L) du système de barres omnibus et des deuxièmes modules de barres omnibus (6) pour les conducteurs de protection (P, N) du système de barres omnibus.

23. Système de barres omnibus selon l'une des revendications précédentes 1 à 22,
dans lequel le module de plaque de base (1) protégé contre les contacts est intégré dans une armoire de distribution (29) permettant de loger plusieurs appareils (11), lesquels sont enfichés dans les ouvertures de contact (5) des modules de barres omnibus (6) cpmpris dans le module de plaque de base (1).

24. Système de barres omnibus selon l'une des revendications précédentes 1 à 23,
dans lequel le module de plaque de base (1) protégé contre les contacts présente sur sa face arrière au moins un composant d'encliquetage (17) opérant des deux côtés, lequel s'engage dans un rail porteur (23) par-dessus et par-dessous pour un montage frontal sans basculement.

25. Système de barres omnibus selon l'une des revendications précédentes 1 à 24,
dans lequel des modules supplémentaires et/ou des éléments de liaison amortisseurs de vibrations peuvent être rapportés sur le module de plaque de base (1), en particulier également dans un état monté du module de plaque de base (1) .

26. Système de barres omnibus selon l'une des revendications précédentes 1 à 25,
dans lequel l'injection de courant ou de tension dans les modules de barres omnibus (6) s'effectue depuis la face avant ou depuis la face arrière du module de plaque de base (1) .

27. Module de barres omnibus (6) pour un système de barres omnibus selon l'une des revendications précédentes 1 à 26,
dans lequel le module de barres omnibus (6) présente une pluralité d'ouvertures de contact (5) également écartées d'une grille d'ouvertures de contact et a un profil transversal plat, fermé ou un profil en forme de U doté de deux montants latéraux opposés (6A, 6B), dans lequel les montants latéraux opposés (6A, 6B) sont reliés l'un à l'autre par le biais d'une traverse de liaison (6C), laquelle présente les ouvertures de contact (5) de la grille d'ouvertures pour l'enfichage de contacts de raccordement électriques élastiques (13) d'un appareil à raccorder (11) ou d'un module d'injection, d'un module de pont, d'un module de capuchon d'extrémité ou d'un autre module du système de barres omnibus.
